# EUROPEAN PATENT APPLICATION

(11) **EP 4 632 710 A1**
(43) Date of publication of application: **15.10.2025**
(21) Application number: 23900737.0
(22) Date of filing: 07.12.2023
(51) Int. Cl.: G08B 21/02, B25J 13/00, B66F 9/24, G08B 21/00, G08B 21/24

(54) **INFORMATION PROCESSING DEVICE AND PROGRAM**

(30) Priority: 08.12.2022 JP 2022196679; 18.01.2023 JP 2023006168; 24.01.2023 JP 2023008910; 26.05.2023 JP 2023087264; 26.05.2023 JP 2023087265
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/043918
(87) International publication number: WO 2024/122625

(57) **Abstract**

Provided is an information processing device including: an acquisition unit that acquires detection information obtained by detecting a positional relationship in a work area between a human and a work body working together with the human in the work area; and a control unit that causes, on the basis of the detection information acquired by the acquisition unit, a notification unit mounted on the work body to notify the human of alert information that urges the human to pay attention in a case in which the positional relationship is a predetermined relationship.

## Description

### Technical Field

The present disclosure relates to an information processing device and a program.

### Background Art

Japanese Patent Application Laid-Open (JP-A) No. 2022-035198 describes a vehicle having an automatic driving function.

### SUMMARY OF INVENTION

### Solution to Problem

According to one embodiment of the present disclosure, an information processing device is provided. An information processing device according to a first aspect includes: an acquisition unit that acquires detection information obtained by detecting a positional relationship in a work area between a human and a work body working together with the human in the work area; and a control unit that causes, on the basis of the detection information acquired by the acquisition unit, a notification unit mounted on the work body to notify the human of alert information that urges the human to pay attention in a case in which the positional relationship is a predetermined relationship.

In an information processing device according to a second aspect, the case in which the positional relationship is the predetermined relationship is a case in which a distance between the work body and the human in the work area is within a predetermined range, as set forth in the information processing device of the first aspect.

In an information processing device according to a third aspect, the case in which the positional relationship is the predetermined relationship is a case in which the distance between the work body and the human in the work area is within the predetermined range, and there is a possibility that the work body and the human come into contact with each other, as set forth in the information processing device of the second aspect.

In an information processing device according to a fourth aspect, the case in which there is a possibility that the work body and the human come into contact with each other is a case in which a time to collision between the work body and the human has a predetermined value or smaller, as set forth in the information processing device of the third aspect.

In an information processing device according to a fifth aspect, the control unit changes content of the alert information that is caused to be notified by the notification unit, according to the possibility that the work body and the human come into contact with each other, as set forth in the information processing device of the fourth aspect.

In an information processing device according to a sixth aspect, the alert information includes at least one of a predetermined warning sound, a predetermined voice from the human, or predetermined light, as set forth in the information processing device according to any one of the first to fifth aspects.

In an information processing device according to a seventh aspect, the control unit notifies, of alert information notified in the past, another human who works in the same area as an area where a human who was notified of the alert information in the past worked, as set forth in the information processing device according to any one of the first to sixth aspects.

In an information processing device according to an eighth aspect, the control unit causes the notification unit to make notification that the alert information was notified in the same area in the past, as set forth in the information processing device according to the seventh aspect.

In an information processing device according to a ninth aspect, the control unit changes a mode of the notification of the alert information according to a notification frequency or a number of times of the notification of the alert information in the same area in the past, as set forth in the information processing device according to the eighth aspect.

In an information processing device according to a tenth aspect, the control unit determines, in a case in which a plurality of pieces of alert information were notified in the past, whether to cause the notification unit to make notification of all the pieces of alert information or only some of the pieces of alert information according to a state of the human, as set forth in the information processing device according to any one of the seventh to ninth aspects.

In an information processing device according to an eleventh aspect, the control unit outputs, in the case in which the positional relationship is the predetermined relationship, video data of video light emitted from a light projection device included in the notification unit as the alert information, as set forth in the information processing device according to the second aspect.

In an information processing device according to a twelfth aspect, the video data includes data that enables projection mapping, as set forth in the information processing device according to the eleventh aspect.

In an information processing device according to a thirteenth aspect, the video data is configured such that the projection mapping is performed on at least one of a floor surface, a ceiling surface, or a wall surface of the work area, as set forth in the information processing device according to the twelfth aspect.

In an information processing device according to a fourteenth aspect, the video data is configured such that the projection mapping is performed on a corresponding surface of a structure including a surface along a reference surface extending in a direction intersecting the floor surface of the work area, as set forth in the information processing device according the twelfth or thirteenth aspect.

An information processing device according to a fifteenth aspect further includes a calculation unit configured to generate a control variable for controlling an action of the work body to specify an orientation of the light projection device on the basis of position information of the work body and position information of the human, in which the control unit provides the video data to the light projection device after the orientation of the light projection device of the notification unit is specified, as set forth in the information processing device according to any one of the twelfth to fourteenth aspects.

In an information processing device according to a sixteenth aspect, the calculation unit is configured to generate the control variable on the basis of structure information of the work area in addition to the position information of the work body and the position information of the human, the structure information of the work area includes position information of a structure that divides the work area into a first area through which the work body and the human can pass in the work area and a second area through which the work body cannot pass in the work area, and position information of a structure of the work area, and the control variable is configured to orient the light projection device toward the structure, as set forth in the information processing device according to the fifteenth aspect.

In an information processing device according to a seventeenth aspect, the video data is provided to enable the projection mapping on the structure after the control variable is specified, as set forth in the information processing device according to the sixteenth aspect.

In an information processing device according to an eighteenth aspect, the structure information is updated by the detection information from the acquisition unit, as set forth in the information processing device according to the sixteenth or seventeenth aspect.

In an information processing device according to a nineteenth aspect, the calculation unit is configured to prepare the video data on the basis of at least one of the position information of the work body, the position information of the human, or the structure information of the work area, as set forth in the information processing device according to any one of the sixteenth to eighteenth aspects.

In an information processing device according to a twentieth aspect, the video data is generated by the calculation unit on the basis of at least one of the position information of the work body, the position information of the human, or the structure information of the work area, as set forth in the information processing device according to the nineteenth aspect.

In an information processing device according to a twenty-first aspect, the video data is selected from a plurality of pieces of candidate data on the basis of at least one of the position information of the work body, the position information of the human, or the structure information of the work area, as set forth in the information processing device according to the nineteenth or twentieth aspect.

In an information processing device according to a twenty-second aspect, the acquisition unit further acquires, as the detection information, position information of an object different from the work body and the work area in addition to the position information of the work body and the position information of the human, and the calculation unit determines whether or not at least a part of the object is located in the first area on the basis of the position information of the object, and adds the position information of the object to the structure information in a case in which the determination indicates that the object is located in the first area, as set forth in the information processing device according to any one of the sixteenth to twenty-first aspects.

In an information processing device according to a twenty-third aspect, the control unit causes the work body to act to urge the human to pay attention on the basis of the detection information acquired by the acquisition unit, as set forth in the information processing device according to any one of the first to the twenty-second aspects.

In an information processing device according to a twenty-fourth aspect, the control unit causes the notification unit mounted on the work body to notify the human of the alert information that urges the human to pay attention in the case in which the positional relationship is the predetermined relationship on the basis of the detection information acquired by the acquisition unit, as set forth in the information processing device according to the twenty-third aspect.

In an information processing device according to a twenty-fifth aspect, the detection information includes the position information of the work body, the position information of the human, and configuration information of the work area, the configuration information of the work area includes position information of the first area through which the work body and the human can pass in the work area and position information of the second area through which the work body cannot pass in the work area, the first area includes a plurality of sections, the second area includes at least one section, the position information of the first area and the position information of the second area include, for each of the sections, indicators related to safety in the positional relationship between the work body and the human, and the information processing device further includes the calculation unit configured to generate the control variable for controlling the action of the work body on the basis of the indicators, the position information of the work body, the position information of the human, and the configuration information of the work area, as set forth in the information processing device according to the twenty-third or twenty-fourth aspect.

In an information processing device according to a twenty-sixth aspect, the detection information includes the position information of the work body, the position information of the human, and the configuration information of the work area, the configuration information of the work area includes the position information of the first area through which the work body and the human can pass in the work area and the position information of the second area through which the work body cannot pass in the work area, the first area includes the plurality of sections, the second area includes the at least one section, the information processing device further includes the calculation unit configured to generate, on the basis of first position information in each of the sections of the first area and second position information of the section of the second area, an indicator related to the safety in the positional relationship between the work body and the human for each of the sections of the first area, and add the indicator to the first position information, and the calculation unit is configured to generate the control variable for controlling the action of the work body on the basis of the indicator, the position information of the work body, the position information of the human, and the configuration information of the work area, as set forth in the information processing device according to any one of the twenty-third to twenty-fifth aspects.

In an information processing device according to a twenty-seventh aspect, the sections of the first area includes a first section, a second section, and a third section adjacent to the first section and the second section, the first section represents a first passage running in a first direction, the second section represents a second passage running in a second direction different from the first direction, the third section represents a junction of the first passage and the second passage, and an indicator of the third section is set to indicate a stronger alert than an indicator of the first section and an indicator of the second section, as set forth in the information processing device according to the twenty-fifth or twenty-sixth aspect.

In an information processing device according to a twenty-eighth aspect, the acquisition unit further acquires, as the detection information, position information of an obstacle between the first section and the second section in one of the first section and the second section, and the calculation unit determines presence or absence of a field of view from one of the first section and the second section to the other on the basis of the position information of the obstacle in the configuration information of the work area, and updates the indicator of the third section to indicate a stronger alert in a case in which the determination indicates that the field of view is absent, as set forth in the information processing device according to the twenty-seventh aspect.

In an information processing device according to a twenty-ninth aspect, the calculation unit sets, as the indicator, a level indicating an alert in each of the sections of the first area from a viewpoint of the safety, as set forth in the information processing device according to any one of the twenty-fifth to twenty-eighth aspects.

In an information processing device according to a thirtieth aspect, the acquisition unit further acquires, as the detection information, illumination information of illuminance at at least one position in each of the sections of the first area, and the calculation unit determines the quantity of light in each of the sections on the basis of the illumination information, and updates the indicator of the section to indicate a stronger alert in a case in which the determination indicates an insufficiency in the quantity of light, as set forth in the information processing device according to any one of the twenty-fifth to twenty-ninth aspects.

In an information processing device according to a thirty-first aspect, the acquisition unit further acquires, as the detection information, the position information of the object different from the work body and the work area, in addition to the work body and the human, and the calculation unit determines, on the basis of the position information of the object, in which section of the first area the object is located, and updates the indicator of the section to indicate a stronger alert in a case in which the determination indicates that the object is located in the section, as set forth in the information processing device according to any one of the twenty-fifth to thirtieth aspects.

In an information processing device according to a thirty-second aspect, the control variable is generated to cause the work body to perform at least one of setting, pausing, or slowing-down a warning mode, or delivering at least one of a sound or light from the notification unit, as set forth in the information processing device according to any one of the twenty-fifth to thirty-first aspects.

According to one embodiment of the disclosure, provided is a program for causing a computer according to a thirty-third aspect to function as the information processing device according to any one of the first to thirty-second aspects.

Note that the above summary of the disclosure does not include all necessary features of the disclosure. Further, a sub-combination of these features can also be included in the disclosure.

### BRIEF DESCRIPTION OF DRAWINGS

Fig. 1 is an explanatory diagram illustrating an example of information accumulated in cloud according to a first embodiment.
Fig. 2 is a schematic diagram of a network configuration according to the first embodiment.
Fig. 3 is a perspective view illustrating a forklift according to the first embodiment.
Fig. 4 is a plan view of tires of the forklift according to the first embodiment.
Fig. 5 is a plan view of the tires of the forklift according to the first embodiment.
Fig. 6 is a diagram schematically illustrating an example of a hardware configuration of a computer functioning as a central brain.
Fig. 7 is a block diagram illustrating examples of the functional components of the computer functioning as the central brain.
Fig. 8 is a flowchart executed by the central brain according to the first embodiment.
Fig. 9 is a schematic diagram of a network configuration according to a second embodiment.
Fig. 10 is a front view of a humanoid robot according to the second embodiment.
Fig. 11 is a side view of the humanoid robot according to the second embodiment.
Fig. 12 is a diagram schematically illustrating a work body and a work area where a worker exists.
Fig. 13 is a diagram schematically illustrating a work area where a work body, a worker, and an object exist.
Fig. 14 is a diagram schematically illustrating a scene where a work body and a worker are arranged in a predetermined relationship on a straight path of a map illustrated in Fig. 12.
Fig. 15 is a diagram schematically illustrating a scene where the work body and the worker are arranged in the predetermined relationship on the straight path of the map illustrated in Fig. 12.
Fig. 16 is a diagram schematically illustrating a scene where the work body and the worker are arranged in the predetermined relationship on the straight path of the map illustrated in Fig. 12.
Fig. 17 is a diagram schematically illustrating a scene where the work body and the worker are arranged in a predetermined relationship on a T-shaped path of the map illustrated in Fig. 12.
Fig. 18 is a diagram schematically illustrating a scene where the work body and the worker are arranged in the predetermined relationship on a T-shaped path of the map illustrated in Fig. 12.
Fig. 19 is a diagram schematically illustrating a scene where the work body and the worker are arranged in a predetermined relationship on a right-angle turning path of the map illustrated in Fig. 12.
Fig. 20 is a diagram schematically illustrating a scene where the work body and the worker are arranged in the predetermined relationship on the right-angle turning path of the map illustrated in Fig. 12.
Fig. 21 is a diagram schematically illustrating a scene where the work body on the straight path and the worker in a rest place adjacent to the straight path of the map illustrated in Fig. 12 are arranged in a predetermined relationship.
Fig. 22 is a diagram schematically illustrating a scene where the work body and the worker are arranged in a predetermined relationship at a crossing of the map illustrated in Fig. 12.
Fig. 23 is a diagram schematically illustrating a scene where the work body and the worker are arranged in the predetermined relationship at the crossing of the map illustrated in Fig. 12.
Fig. 24 is a flowchart executed by the central brain according to a fifth embodiment.
Fig. 25 is a diagram schematically illustrating a work area.
Fig. 26 is a diagram schematically illustrating a corner section and an adjacent section of a first area in configuration information of the work area.
Fig. 27 is a diagram schematically illustrating the corner section and the adjacent section of the first area in the configuration information of the work area.
Fig. 28 is a diagram schematically illustrating the work area.
Fig. 29 is a flowchart executed by the central brain according to a sixth embodiment.

### DESCRIPTION OF EMBODIMENTS

Hereinafter, embodiments of the present disclosure will be described, and the following embodiments do not limit the disclosure. Further, not all combinations of features described in the embodiments are essential to the solution of the disclosure.

### (First Embodiment)

First, the first embodiment according to the present embodiment will be described.

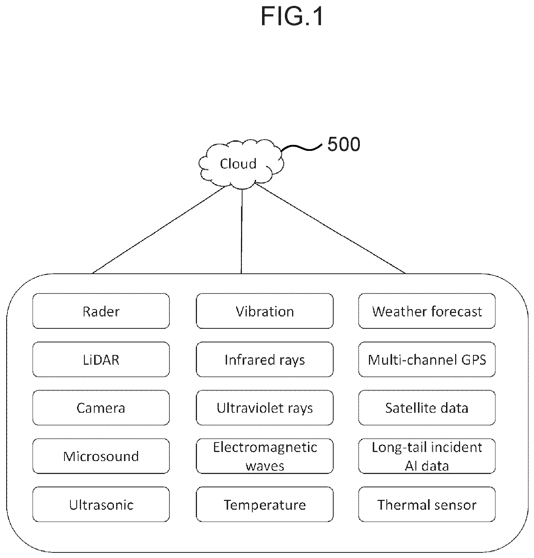

Fig. 1 is an explanatory diagram illustrating an example of information accumulated in cloud 500 according to the embodiment. In the first embodiment, a plurality of types of detection information to be described later is converted into AI data and accumulated in the cloud 500. Artificial intelligence (AI) predicts and determines the best mix of situations every nanosecond (one-billionth of a second) to optimize an action of a forklift 10. The forklift 10 is an example of the "work body".

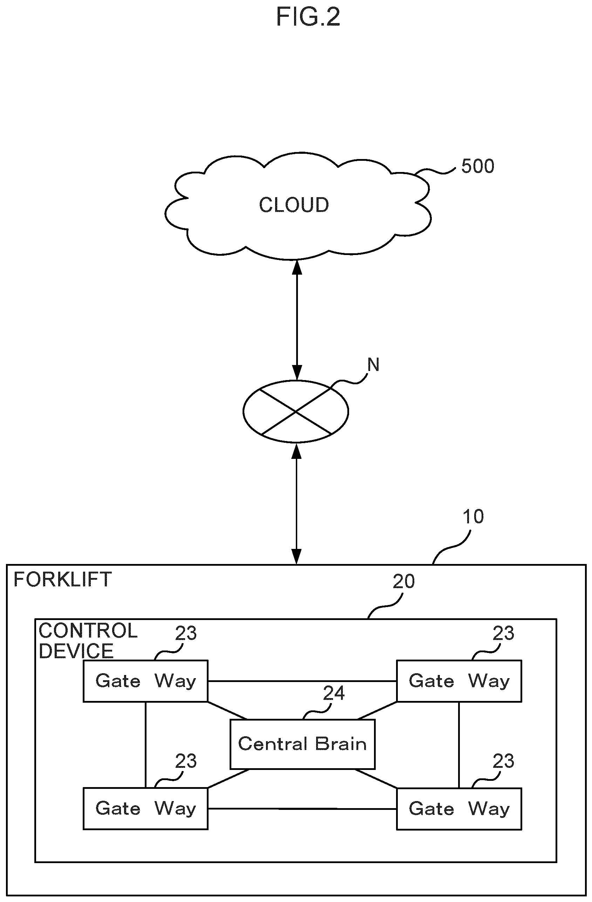

Fig. 2 is a schematic diagram of a network configuration according to the first embodiment. The forklift 10 of the first embodiment is connected to the cloud 500 via a network N. An example of the network N is a public line according to a 6G or higher communications standard.

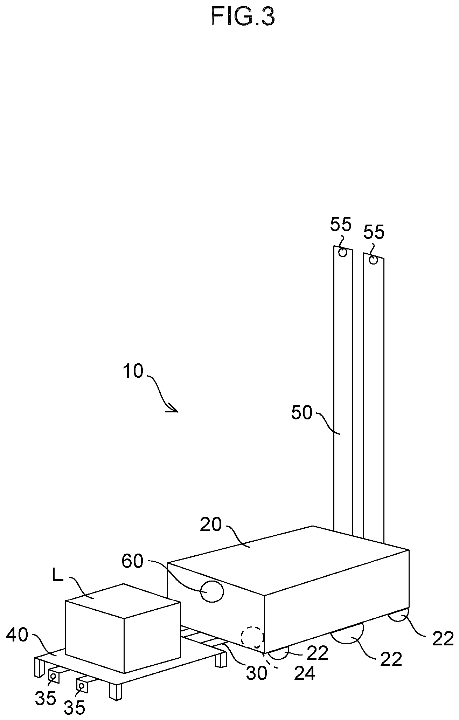

Fig. 3 is a perspective view illustrating the forklift 10 according to the present embodiment.

As illustrated in Fig. 3, the forklift 10 includes a control device 20, forks 30, a pallet 40, guides 50, and a notification unit 60.

The control device 20 is a component that controls the action of the forklift 10. The "action of the forklift 10" is a concept including an action of each member included in the forklift 10 and an action of the forklift 10 itself, specifically, an autonomous driving action of the forklift 10.

As an example, the control device 20 has a rectangular parallelepiped shape. A plurality of tires 22 are arranged below the control device 20. A central brain 24 is further disposed inside the control device 20. The central brain 24 is an example of the information processing device.

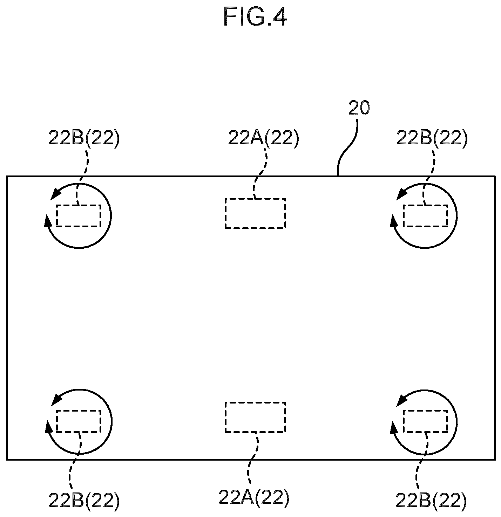

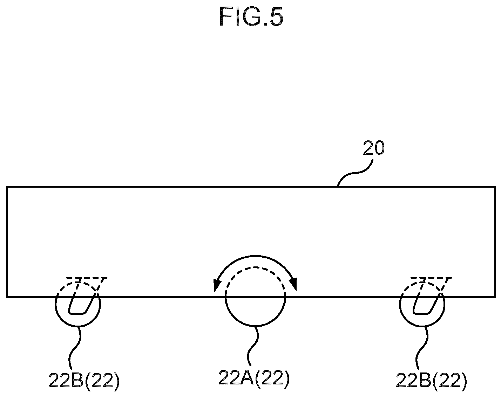

Figs. 4 and 5 are diagram for describing the tires 22 of the forklift 10 according to the present embodiment. The tires 22 according to the embodiment includes a pair of driving wheels 22A arranged on the left and right sides at the center of the front and rear portions of the forklift 10, and driven wheels 22B arranged at four corners. The driving wheels 22A are not rotatable and can be driven by motors (not illustrated) independently mounted on the left and right sides. The driven wheels 22B are so-called rotatable casters. The forklift 10 moves forward or backward by rotating the left and right driving wheels 22A in the same direction. In this case, the forklift 10 can bend leftward or rightward by changing the rotation speeds of the left and right driving wheels 22A rotated in the same direction. Further, the forklift 10 rotates on the spot by rotating the left and right driving wheels 22A in opposite directions. Note that each of the tires 22 may include a suspension for buffering an impact from a traveling path. As described above, the forklift 10 according to the embodiment can freely travel on the traveling path by independently rotating the left and right driving wheels 22A based on control of the central brain 24.

As illustrated in Fig. 2, a plurality of gate ways 23 are communicably connected to the central brain 24. The central brain 24 is connected to an external cloud 500 via the gate ways 23. The central brain 24 is configured to be able to access the external cloud 500 via the gate ways 23. In this regard, due to the presence of the gate ways 23, the central brain 24 cannot be directly accessed from the outside.

The central brain 24 outputs a request signal to a server every time a predetermined period of time elapses. Specifically, the central brain 24 outputs a request signal representing an inquiry to the cloud 500 serving as the server every nanosecond.

Returning to Fig. 3, each of the forks 30 has a distal end at which a sensor 35 is disposed.

A cargo L is placed on a placement surface of the pallet 40.

The guides 50 extend upward from one end in a front-rear direction of the control device 20. Sensors 55 are disposed at upper ends of the guides 50.

The notification unit 60 is disposed on a front surface side of the control device 20. As an example, the notification unit 60 is a speaker capable of outputting a predetermined sound.

Here, examples of the sensors 35 and the sensors 55 described above include a millimeter wave sensor, radar, LiDAR, and a high pixel, telephoto, ultra-wide angle, 360-degree, high-performance camera for vision recognition, fine sounds, ultrasonic waves, vibration, infrared rays, ultraviolet rays, electromagnetic waves, temperatures, humidity, spot AI weather forecast, high-accuracy multi-channel GPS, low-altitude satellite information, long-tail incident AI data, and the like. The long tail incident AI data refers to data corresponding to trip data of a motor vehicle with a level-5 automatic driving function.

Examples of the detection information to be taken in from the sensors 35 and the sensors 55 as well as other sensors include position information of a worker who works in a factory, an orientation of the worker, a line-of-sight direction of the worker, a posture of the worker, position information, the center of gravity, and an orientation of the forklift 10 that works together with the worker in the factory, orientations, materials, abrasion statuses, and air pressures of the tires 22, road conditions (a friction coefficient, inclinations in vertical and lateral oblique directions, materials, road widths, and the like), a type, a weight, a transport source, a transport destination, and a travel route of the load L, an outside air temperature, an outside air humidity, as well as surrounding conditions (birds, animals, soccer balls, accident vehicles, earthquakes, fires, winds, typhoons, heavy rain, light rain, snowstorm, fog, and the like). In the embodiment, these detections are performed every nanosecond. The other sensors described above may be mounted on the forklift 10 or may be disposed in the factory where the forklift 10 works. The worker is an example of the "human", and the factory is an example of the "work area".

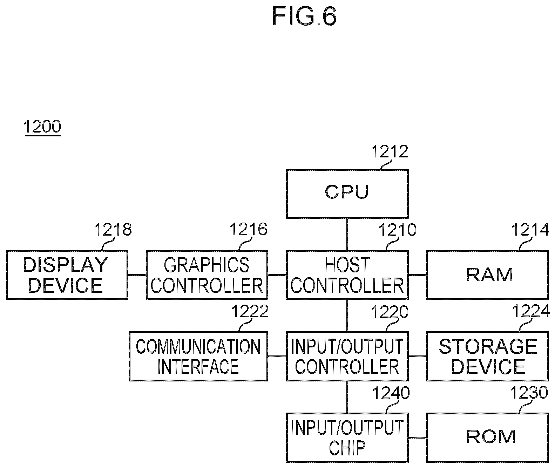

Fig. 6 schematically illustrates an example of a hardware configuration of a computer 1200 functioning as the central brain 24. The program installed on the computer 1200 can cause the computer 1200 to function as one or more "units" of the device according to the embodiment, or cause the computer 1200 to execute an operation associated with the device according to the embodiment or the one or more "units", and/or cause the computer 1200 to execute a process according to the embodiment or a stage of the process. Such program may be executed by a CPU 1212 to cause the computer 1200 to execute a specific operation associated with some or all of blocks of flowcharts and block diagrams to be described herein later.

The computer 1200 according to the embodiment includes the CPU 1212, a RAM 1214, and a graphics controller 1216, all of which are mutually connected by a host controller 1210. The computer 1200 also includes input/output units such as a communication interface 1222, a storage device 1224, a DVD drive, and an IC card drive, all of which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes legacy input/output units such as a ROM 1230 and a keyboard, all of which are connected to the input/output controller 1220 via an input/output chip 1240.

The CPU 1212 operates according to programs stored in the ROM 1230 and the RAM 1214, thereby controlling each of the units. The graphics controller 1216 obtains image data generated by the CPU 1212 in a frame buffer or the like provided in the RAM 1214 or itself, and causes the image data to be displayed on a display device 1218.

The communication interface 1222 communicates with other electronic devices via the network. The storage device 1224 stores a program and data used by the CPU 1212 in the computer 1200. The DVD drive reads a program or data from a DVD-ROM or the like and provides the program or data to the storage device 1224. The IC card drive reads a program and data from an IC card and/or writes the program and data to the IC card.

The ROM 1230 stores therein a boot program or the like executed by the computer 1200 during activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as the DVD-ROM or the IC card. The program is read from the computer-readable storage medium, installed on the storage device 1224, the RAM 1214, or the ROM 1230, which is also an example of the computer-readable storage medium, and executed by the CPU 1212. The information processing described in these programs is read by the computer 1200 and brings about cooperation between the programs and the various types of hardware resources described above. The device or method may be configured by implementing the information operation or processing according to use of the computer 1200.

For example, in a case in which the communication is executed between the computer 1200 and an external device, the CPU 1212 may execute a communication program loaded in the RAM 1214 and instruct the communication interface 1222 to perform communication processing on the basis of processing described in the communication program. Under control of the CPU 1212, the communication interface 1222 reads transmission data stored in a transmission buffer region provided in a recording medium such as the RAM 1214, the storage device 1224, the DVD-ROM, or the IC card, transmits the read transmission data to the network, or writes reception data received from the network to a reception buffer region or the like provided in the recording medium.

Further, the CPU 1212 may cause the RAM 1214 to read all or a necessary part of a file or a database stored in an external recording medium such as the storage device 1224, the DVD drive (DVD-ROM), or the IC card, and may execute various types of processing on data in the RAM 1214. Next, the CPU 1212 may write back the processed data to the external recording medium.

Various types of information such as various types of programs, data, tables, and databases may be stored in the recording medium and subjected to the information processing. The CPU 1212 may execute, on the data read from the RAM 1214, various types of processing including various types of operations, information processing, condition determination, conditional branching, unconditional branching, information retrieval/replacement, and the like, all of which are described throughout the disclosure and specified by a command sequence of a program, and writes back results to the RAM 1214. Further, the CPU 1212 may retrieve information in the file, the database, or the like in the recording medium. For example, in a case in which a plurality of entries each having an attribute value of a first attribute associated with an attribute value of a second attribute is stored in the recording medium, the CPU 1212 may retrieve an entry in which the attribute value of the first attribute matches a specified condition from the plurality of entries, and read the attribute value of the second attribute stored in the entry, thereby acquiring the attribute value of the second attribute associated with the first attribute satisfying a predetermined condition.

The program or a software module described above may be stored in a computer-readable storage medium in the computer 1200 or near the computer 1200. Further, a recording medium such as a hard disk or a RAM provided in a server system connected to a dedicated communication network or the Internet can be used as the computer-readable storage medium, thereby providing the program to the computer 1200 via the network.

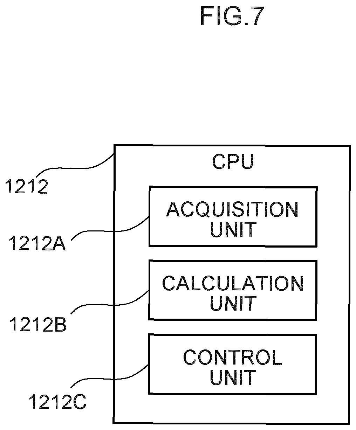

Fig. 7 is a block diagram illustrating examples of functional components of the computer 1200 functioning as the central brain 24.

As illustrated in Fig. 7, the CPU 1212 of the computer 1200 includes an acquisition unit 1212A, a calculation unit 1212B, and a control unit 1212C as functional components. Each of the functional components is implemented by the CPU 1212 reading and executing the program installed on the computer 1200.

The acquisition unit 1212A acquires detection information detected by the sensors 35, the sensors 55, and other sensors every nanosecond during the action of the forklift 10.

The calculation unit 1212B calculates a control variable for controlling the action of the forklift 10 every nanosecond on the basis of the detection information acquired by the acquisition unit 1212A. The control variable is a control value for controlling the action of each member included in the forklift 10 and the automatic driving action of the forklift 10.

The control unit 1212C controls the action of the forklift 10 in a unit of nanosecond on the basis of the control variable calculated by the calculation unit 1212B.

Further, in a case in which a positional relationship between the forklift 10 and the worker in the factory is in a predetermined relationship on the basis of the detection information acquired by the acquisition unit 1212A, the control unit 1212C causes the notification unit 60 mounted on the forklift 10 to notify the worker of alert information that urges the worker to pay attention. The case in which the above positional relationship is a predetermined relationship is, for example, a case in which a distance between the forklift 10 and the worker in the factory is within a predetermined range. Note that the above "predetermined range" can be appropriately set to 1 meter, 3 meters, or the like. The control unit 1212D calculates the distance between the forklift 10 and the worker on the basis of the detection information, and causes the notification unit 60 to output a predetermined warning sound (beep sound) as the alert information in a case in which the calculated distance is within the predetermined range.

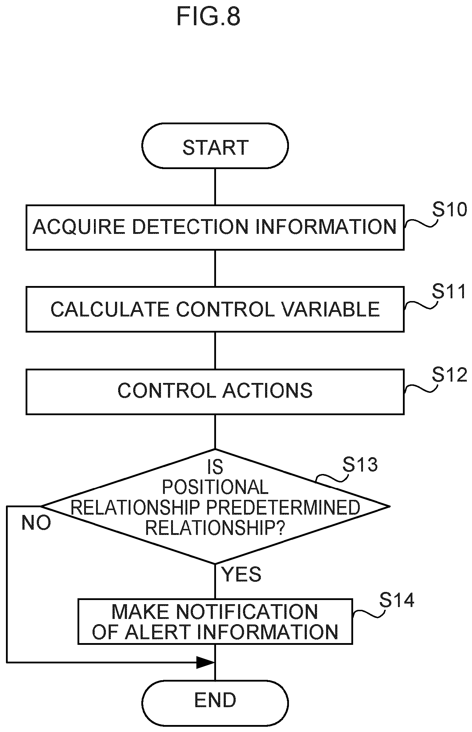

Next, a flow of processing to be executed by the computer 1200 functioning as the central brain 24 will be described. In the computer 1200, the CPU 1212 reads out the program installed in the computer 1200, and develops and executes the program in the RAM 1214, thereby executing the processing of the flowchart illustrated in Fig. 8.

In step S10, the CPU 1212 acquires the detection information detected by the sensors 35, the sensors 55, and other sensors. Then, the CPU 1212 proceeds to step S11.

In step S11, the CPU 1212 calculates the control variable on the basis of the detection information acquired in step S10. Then, the CPU 1212 proceeds to step S12.

In step S12, the CPU 1212 controls the action of the forklift 10 on the basis of the control variable calculated in step S11. Then, the CPU 1212 proceeds to step S13.

In step S13, the CPU 1212 determines whether or not the positional relationship between the forklift 10 and the worker in the factory is the predetermined relationship on the basis of the detection information acquired in step S10. Here, in a case of determining that the positional relationship is the predetermined relationship (step S13: YES), the CPU 1212 proceeds to step S14. On the contrary, in a case of determining that the positional relationship is not the predetermined relationship (step S13: NO), the CPU 1212 ends the processing of the flowchart illustrated in Fig. 8.

In step S14, the CPU 1212 causes the notification unit 60 to make the notification of the alert information. Then, the CPU 1212C ends the processing of the flowchart illustrated in Fig. 8.

As described above, in the computer 1200 functioning as the central brain 24 according to the first embodiment, the CPU 1212 acquires detection information obtained by detecting the positional relationship in the factory between the worker and the forklift 10 that works together with the worker in the factory. Then, in a case in which the positional relationship is the predetermined relationship on the basis of the acquired detection information, the CPU 1212 causes the notification unit 60 mounted on the forklift 10 to notify the worker of the alert information that urges the worker to pay attention.

In recent years, a work body such as the above forklift 10 of which the automatic driving is controlled by AI has been introduced as manual labor in a factory and works together with a worker. Here, in the future, although there may be a factory where only the work body works, it is difficult to immediately eliminate the manual labor from the factory. Accordingly, it is expected that the situation in which the worker will manually work with the work body in the factory will continue for some time.

According to the configuration of the computer 1200 according to the first embodiment, in the case in which the distance between the forklift 10 and the worker in the factory is within the predetermined range, the notification unit 60 can make the notification of the alert information. Therefore, in the factory where the forklift 10 and the worker coexist, the forklift 10 and the worker can be allowed to work safely.

### (Second Embodiment)

Next, the second embodiment according to the present embodiment will be described while omitting or simplifying parts that overlap with the above embodiment.

In the second embodiment, the best mix of the situations is predicted and determined every nanosecond by AI from the detection information accumulated in the cloud 500, and actions of a humanoid robot 1 are optimized. The humanoid robot 1 is an example of the "work body".

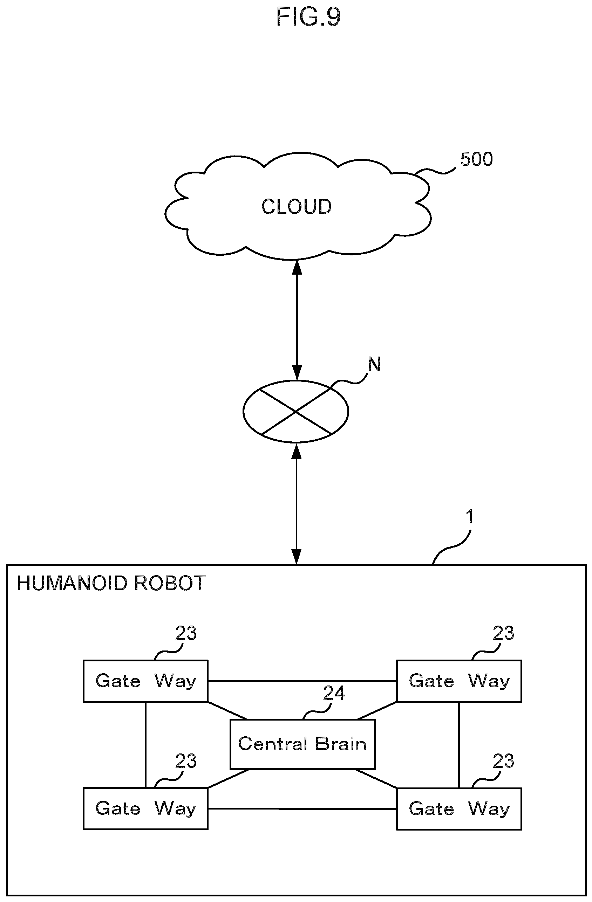

Fig. 9 is a schematic diagram of a network configuration according to the second embodiment. The humanoid robot 1 of the second embodiment is connected to the cloud 500 via the network N.

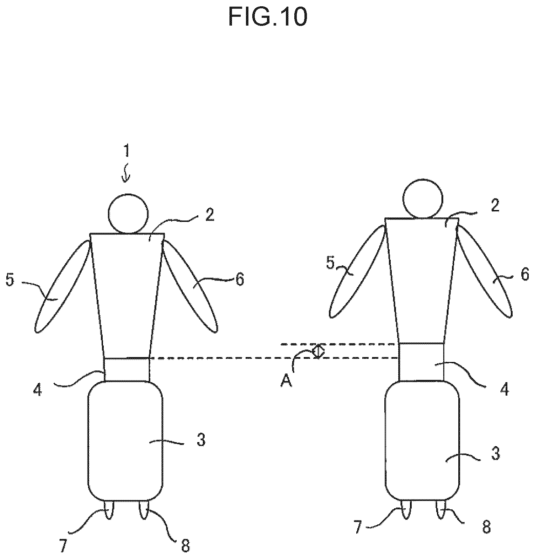

Fig. 10 is a front view of the humanoid robot 1 according to the present embodiment. As illustrated in Fig. 10, the humanoid robot 1 of the embodiment includes an upper body 2, a leg 3, and a connector 4 that rotatably connects the upper body 2 to the leg 3. The humanoid robot 1 is disposed on, for example, a production line of the factory, and makes operations on an object on the line or a floor.

The upper body 2 has two arms 5 and 6. The arms 5 and 6 are rotatably attached to left and right sides of the upper body 2. Grips (not illustrated) for gripping the object are further attached to distal ends of the arms 5 and 6. Note that the number of arms is not limited to two, and may be more or less than two.

The leg 3 has a lower portion to which two wheels 7 and 8 are attached, and can move on the floor on which the humanoid robot 1 is disposed.

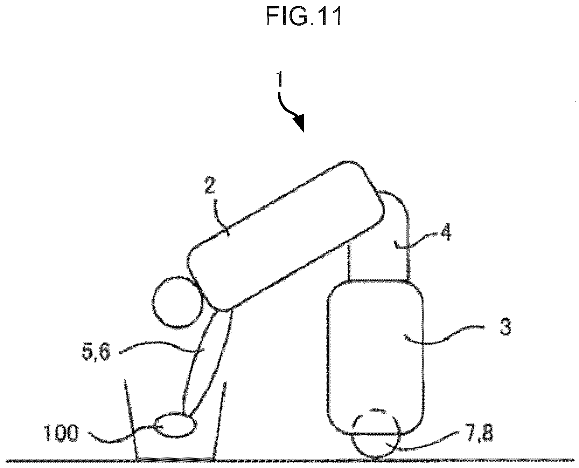

The connector 4 rotatably connects the upper body 2 and the leg 3. Therefore, the upper body 2 can be tilted forward and backward with respect to the leg 3. Therefore, as illustrated in Fig. 11, the humanoid robot 1 according to the embodiment can tilt the upper body 2 forward with respect to the leg 3 to pick up the object 100 placed on the floor or dropped on the floor during the work.

Note that the leg 3 has a balance function for preventing the humanoid robot 1 from falling down when the upper body 2 tilts forward or backward with respect to the leg 3 or the humanoid robot 1 moves.

As illustrated in Fig. 10, the connector 4 also has a function capable of changing a distance between the upper body 2 and the leg 3. Therefore, a position in a vertical direction of the upper body 2 with respect to the leg 3 can be adjusted as indicated by an arrow A so as to match the height of a workbench on the production line.

Further, driving of the humanoid robot 1 according to the embodiment is controlled by the central brain 24 (see Fig. 9) installed in the humanoid robot 1. Then, the computer 1200 functioning as the central brain 24 according to the second embodiment includes an acquisition unit 1212A, a calculation unit 1212B, and a control unit 1212C as functional components similar to those in the first embodiment (see Fig. 7).

The acquisition unit 1212A acquires detection information detected by a mounted sensor (not illustrated) mounted on the humanoid robot 1 and other sensors every nanosecond during the actions of the humanoid robot 1. Here, the mounted sensor sequentially acquires position information of a worker who works in the factory, position information of the humanoid robot 1, and information indicating at least a distance and an angle between the arms 5 and 6 and an object around the humanoid robot 1 and on which humanoid robot 1 makes operations. As the mounted sensor, a highest-performance camera, a solid-state LiDAR, a multi-color laser coaxial displacement meter, or various other sensors can be adopted. In addition, examples of the mounted sensor include a vibratory meter, a thermo camera, a hardness meter, radar, LiDAR, and a high-pixel, telephoto, ultra-wide angle, 360-degree, high-performance camera for vision recognition, fine sounds, ultrasonic waves, vibration, infrared rays, ultraviolet rays, electromagnetic waves, temperatures, humidity, spot AI weather forecast, high-accuracy multi-channel GPS, low-altitude satellite information, long tail incident AI data, or the like. Note that, in addition to the above information, the mounted sensor detects an image, a distance, vibration, heat, odor, color, sound, ultrasonic wave, ultraviolet ray, infrared ray, or the like. Examples of the information detected by the mounted sensor also include movement of the center of gravity of the humanoid robot 1, detected material of the floor on which the humanoid robot 1 is installed, detected outside air temperature, detected outside air humidity, detected oblique angles in the vertical and lateral directions of the floor, and detected moisture content. The mounted sensor performs these detections every nanosecond.

The calculation unit 1212B calculates a control variable for controlling the actions of the humanoid robot 1 every nanosecond on the basis of the detection information acquired by the acquisition unit 1212A.

The control unit 1212C controls the actions of the humanoid robot 1 in a unit of nanosecond on the basis of the control variable calculated by the calculation unit 1212B. For example, the control unit 1212C controls rotation and movement in the vertical direction of the connector 4, as well as actions of arms 5, 6 as the actions of the humanoid robot 1.

Further, in a case in which the positional relationship between the humanoid robot 1 and the worker in the factory is in the predetermined relationship on the basis of the detection information acquired by the acquisition unit 1212A, the control unit 1212C causes a notification unit (not illustrated) mounted on the humanoid robot 1 to notify the worker of the alert information that urges the worker to pay attention. The notification unit is a speaker capable of outputting a predetermined sound, similarly to the notification unit 60 in the first embodiment.

As described above, according to the configuration of the computer 1200 according to the second embodiment, in the case in which the distance between the humanoid robot 1 and the worker in the factory is within the predetermined range, the notification unit can make the notification of the alert information. Therefore, in the factory where the humanoid robot 1 and the worker coexist, the humanoid robot 1 and the worker can be allowed to work safely.

### (Third Embodiment)

Next, the third embodiment according to the present embodiment will be described while omitting or simplifying parts that overlap with the above embodiment. Although the forklift 10 is described as an example of the "work body", the third embodiment is also applicable to a case in which the humanoid robot 1 is used as an example of the "work body".

In the third embodiment, in the case in which the positional relationship between the forklift 10 and the worker in the factory is the predetermined relationship, the distance between the forklift 10 and the worker in the factory is within the predetermined range, and the forklift 10 and the worker may come into contact with each other. Further, a case in which the forklift 10 and the worker may come into contact with each other is a case in which a time to collision between the forklift 10 and the worker, that is, a so-called time to collision (TTC) has a predetermined value or smaller. Note that the above "predetermined value" can be appropriately set to 3 seconds, 5 seconds, or the like.

Here, the computer 1200 functioning as the central brain 24 according to the third embodiment includes an acquisition unit 1212A, a calculation unit 1212B, and a control unit 1212C as functional components similar to those in the above embodiment (see Fig. 7). Hereinafter, specific operations of each of the functional components in the third embodiment will be described.

In addition to the detection information that can be acquired in the above embodiment, the acquisition unit 1212A acquires a relative distance and a relative speed between the forklift 10 and the worker from the sensors 35 and the sensors 55 as the detection information every nanosecond. In this case, the sensors 35 and the sensors 55 transmit transmission waves to the front of the forklift 10 and receive a reflected wave from the worker in front, thereby detecting the worker and detecting the relative distance and the relative speed between the forklift 10 and the worker. Note that the worker may be detected on the basis of a captured image obtained by capturing the front of the forklift 10 included in the detection information acquirable from the sensors 35 and the sensors 55.

The calculation unit 1212B calculates the TTC between the forklift 10 and the worker every nanosecond using the relative distance and the relative speed between the forklift 10 and the worker acquired as the detection information by the acquisition unit 1212A.

On the basis of the detection information acquired by the acquisition unit 1212A and the TTC between the forklift 10 and the worker calculated by the calculation unit 1212B, the control unit 1212C causes, in the case in which the positional relationship between the forklift 10 and the worker in the factory is the predetermined relationship, the notification unit 60 mounted on the forklift 10 to make the notification of the alert information. As an example, in the third embodiment, the case in which the positional relationship is the predetermined relationship is set as a case in which the distance between the forklift 10 and the worker in the factory is within 3 meters and the TTC between the forklift 10 and the worker is 3 seconds or less.

Further, the control unit 1212C changes content of the alert information to be notified from the notification unit 60 according to the possibility that the forklift 10 and the worker come into contact with each other. As an example, in the case in which the positional relationship between the forklift 10 and the worker in the factory is the predetermined relationship, the control unit 1212C changes a rhythm of the alert information to be notified from the notification unit 60 as the TTC between the forklift 10 and the worker decreases for a predetermined period of time (for example, 1 second), that is, as the possibility that the forklift 10 and the worker come into contact with each other increases. For example, in a case in which the positional relationship is the predetermined relationship, and the TTC is 3 seconds, the control unit 1212C causes the notification unit 60 to output a warning sound (beep sound) in rhythm that short sounds of "beep, beep" are continuous. Further, in a case in which the positional relationship is the predetermined relationship, and the TTC is 2 seconds, the control unit 1212C causes the notification unit 60 to output a warning sound (beep sound) in rhythm that a long sound and a short sound of "beep, blip" are combined.

Here, the notification unit 60 may be configured to be able to output a predetermined voice message as the alert information instead of or in addition to the warning sound (beep sound). In a case in which the alert information is output as the sound message, the control unit 1212C changes the voice message to be notified from the notification unit 60 as the TTC between the forklift 10 and the worker becomes shorter for a predetermined period of time. For example, the control unit 1212C causes the notification unit 60 to output a voice message "please be careful" in a case in which the TTC is 3 seconds, and causes the notification unit 60 to output a voice message "please avoid to the right" in a case in which the TTC is 2 seconds. In this way, in the case in which the alert information is output as a voice message, the control unit 1212C can cause the notification unit 60 to output a voice message that urges the worker to pay more attention as the TTC becomes shorter. The above example indicates a case in which an instruction based on the voice message is made more specific as the TTC becomes shorter to urge the worker to pay more attention. Moreover, as the TTC becomes shorter, the control unit 1212C may increase a volume or intensify a tone or the like of the voice message to be output from the notification unit 60 as the alert information to urge the worker to pay more attention.

As described above, in the computer 1200 functioning as the central brain 24 according to the third embodiment, the CPU 1212 causes the notification unit 60 to make the notification of the alert information in a case in which the distance between the forklift 10 and the worker in the factory is within the predetermined range and there is a possibility that the forklift 10 and the worker come into contact with each other on the basis of the acquired detection information. In this way, in the computer 1200, for example, in a case in which the distance between the forklift 10 and the worker is within the predetermined range, and the forklift 10 is stopped and there is no possibility that the forklift 10 and the worker come into contact with each other, the notification of the alert information is not made. Therefore, with the computer 1200, it is possible to reduce botheration felt by the worker as compared to a configuration in which the notification unit 60 always makes the notification of the alert information in the case in which the distance between the forklift 10 and the worker is within the predetermined range.

In the above computer 1200, the CPU 1212 determines the case in which there is a possibility that the forklift 10 and the worker come into contact with each other is the case in which the TTC between the forklift 10 and the worker has the predetermined value or smaller. In this way, the computer 1200 can determine whether there is a possibility that the forklift 10 and the worker come into contact with each other using an indicator of the TTC.

In the above computer 1200, the CPU 1212 changes the content of the alert information to be notified from the notification unit 60 according to the possibility that the forklift 10 and the worker come into contact with each other. For example, as the possibility that the forklift 10 and the worker come into contact increases, the CPU 1212 changes the rhythm of the alert information to be notified from the notification unit 60. In this way, the computer 1200 can make the worker pay more attention to the alert information as compared to a configuration in which the content of the alert information does not change.

### (Fourth Embodiment)

Next, the fourth embodiment according to the present embodiment will be described while omitting or simplifying parts that overlap with the above embodiment. Although the forklift 10 is described as an example of the "work body", the fourth embodiment is also applicable to a case in which the humanoid robot 1 is used as an example of the "work body".

In the fourth embodiment, the forklift 10 notifies, of past alert information, another worker who works at the same area as an area (for example, a work line) where a worker who was notified of the alert information in the past worked. The forklift 10 causes the notification unit 60 to make the notification of the alert information notified in the past as a precaution, since it is highly likely that the worker corresponding to the area where the worker was notified of the alert information in the past works is notified of the same alert information as the alert information.

Here, the computer 1200 functioning as the central brain 24 according to the fourth embodiment includes an acquisition unit 1212A, a calculation unit 1212B, and a control unit 1212C as functional components similar to those in the above embodiment (see Fig. 7). Hereinafter, specific operations of the control unit 1212C in the fourth embodiment will be described.

The control unit 1212C makes the notification of the alert information on the basis of the detection information acquired by the acquisition unit 1212A. Here, in a case in which the worker is detected as the detection information and the work line where the worker is present is determined to be the same as the work line where the worker was notified of the alert information in the past based on the current information of the forklift 10, the position information of the worker, and the like, the control unit 1212C causes the notification unit 60 to notify the worker of the same alert information as the alert information of which the worker who worked on the work line in the past was notified.

When causing the notification unit 60 to make the notification of the same alert information as the past alert information, the control unit 1212C may also cause the notification unit 60 to notify that the notification of the alert information was made in the same area in the past.

The control unit 1212C may also change a mode of causing the notification unit 60 to make the notification of the same alert information according to a notification frequency or the number of times of notification of the alert information in the same area in the past. In a case in which the notification frequency or the number of times of notification of the alert information in the same area in the past exceeds a predetermined threshold value, the control unit 1212C may cause the notification unit 60 to make the notification of the alert information by making a sound louder, making characters larger, or the like as compared to a case in which the notification frequency or the number of times of notification does not exceed the threshold value. In this case, the number of threshold values may be one or more.

In a case in which a plurality of pieces of alert information were notified in the past, the control unit 1212C may cause the notification unit 60 to make notification of all the alert information, or may cause the notification unit 60 to make notification of only some of the pieces of the alert information. In this case, for example, the control unit 1212C may determine whether to cause the notification unit 60 to make the notification of all the alert information or cause the notification unit 60 to make the notification of only some of the pieces of alert information according to the state of the worker. Examples of the state of the worker include a line of sight of the worker, a posture of the worker, and the like.

For example, in a case in which the alert information was notified by characters and a sound in the past, the control unit 1212C may cause the notification unit 60 to make the notification of the alert information only by the characters if the worker faces the forklift 10. For example, in the case in which the alert information was notified by characters and a sound in the past, the control unit 1212C may cause the notification unit 60 to make the notification of the alert information by the characters and the sound if the worker does not face the forklift 10.

In this way, in the configuration of the fourth embodiment, the forklift 10 notifies, of the past alert information, the other worker who worked in the same area as the area where the worker who was notified of the alert information in the past worked. The forklift 10 makes the notification of the past alert information, whereby the worker can know what kind of alert information was notified from the forklift 10 in the past in the same area.

### (Fifth Embodiment)

In the description of the fifth embodiment according to the present embodiment, the same or similar portions are denoted by the same or similar reference numerals, and redundant description will be omitted.

In the following description, the forklift 10 according to the first embodiment and the humanoid robot 1 according to the second embodiment are examples of the "work body". The worker is an example of the "human", and the factory is an example of the "work area". The central brain 24 predicts and determines the best mix of situations every nanosecond (one-billionth of a second) by artificial intelligence (AI), and optimizes actions of the work bodies such as the forklift 10 and the humanoid robot 1. Further, the central brain 24 is an example of the information processing device. As already described, it is possible to process the plurality of types of detection information by the AI, and accumulate the processed data in the storage device 1224 or the cloud 500. As illustrated in Fig. 6, the information processing device can include the hardware configuration of the computer 1200 functioning as the central brain 24.

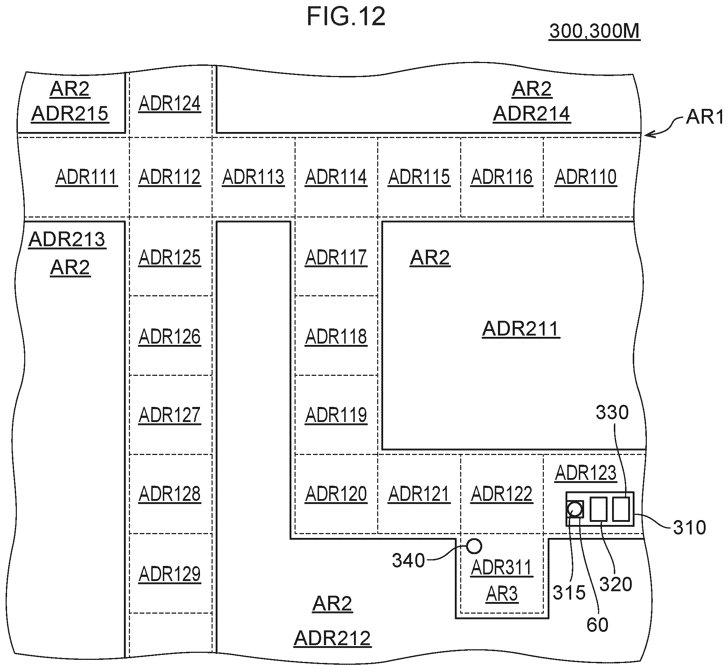

Fig. 12 is a diagram schematically illustrating a work area 300. In the work area 300, a work body 310 is disposed. The work body 310 includes an information processing device 320, one or a plurality of sensors 330, and the notification unit 60. The sensor 330 includes the sensors referred to those in the first embodiment and the second embodiment. The notification unit 60 includes a light projection device 315, and the light projection device 315 may include a driver (not illustrated) and a light projector (not illustrated). The exemplary driver can change an orientation of the light projector through rotation on a horizontal plane (for example, rotation of 360 degrees around) and looking up or down in the vertical direction on a vertical plane to specify a projection direction of the light. The light projector of the light projection device 315 outputs projected light from a video data. The projected light can include a display (for example, character display of "pay attention") that can be used as the alert information.

As illustrated in Fig. 7, the information processing device 320 includes the acquisition unit 1212A and the control unit 1212C. The acquisition unit 1212A acquires detection information detected by a sensor device including the sensors 35, the sensors 55, and other sensors every nanosecond during actions of the work body 310. Specifically, the acquisition unit 1212A acquires detection information obtained by detecting a positional relationship in the work area 300 between a worker 340 and the work body 310 that works together with the worker 340 in the work area 300. The detection information is captured by various sensors that obtain the detection information that has been already described or to be described.

The control unit 1212C controls actions of the work body 310 in a unit of nanosecond on the basis of the control variable calculated by the calculation unit 1212B. Specifically, the control unit 1212C causes the work body 310 to act to urge the worker 340 to pay attention based on the detection information. Specifically, in a case in which a positional relationship between the work body 310 and the worker 340 is a predetermined relationship, the control unit 1212C can cause the notification unit 60 mounted on the work body 310 to notify the worker 340 of alert information that urges the worker 340 to pay attention in a manner that the worker 340 can recognize the alert information. The exemplary control unit 1212C can provide video data of video light emitted from the light projection device 315.

Referring to Fig. 12, a map 300M schematically illustrating configuration information of the work area 300 is shown. The map 300M can be stored in the information processing device 320 and/or the cloud 500. The map 300M can be updated on the basis of the detection information, and the updated map 300M can be sent to the cloud 500. The map 300M can be given in advance as the configuration information of the work area 300, or can be created on the basis of the detection information.

Referring to the map 300M (structure information of the work area), in the exemplary information processing device 320, the work area 300 includes a first area AR1 through which the work body 310 and the worker 340 can pass together in the work area 300, and a second area AR2 through which the work body 310 cannot pass. The second area AR2 can include an area through which the worker 340 can pass and an area through which the worker 340 cannot pass. The first area AR1 includes, for example, a passage, and the second area AR2 includes, for example, an area in which devices and products in the work area 300 are arranged. In at least a part of the second area AR2, for example, the worker 340 can work, and the second area AR2 can include an area that is off-limit to the worker 340 in order to protect the worker 340 from the devices in operation and to protect the products from the worker 340. The work area 300 can further include a third area AR3 through which the work body 310 cannot pass and the worker 340 can pass, and the third area AR3 includes, for example, a rest place for the worker 340 without placing the devices and the products in the third area AR3. The map 300M includes position information of the first area AR1, position information of the second area AR2, and position information of the third area AR3, and can be used as map information by using these pieces of position information. The position information of the first area AR1 can include, for example, information such as coordinates indicating the range, the type of an adjacent area, and presence or absence of a structure at a boundary. The position information of the second area AR2 can include, for example, the information such as the coordinates indicating the range, the type of the adjacent area, and the presence or absence of the structure at the boundary. The position information of the third area AR3 can include, for example, the information such as the coordinates indicating the range, the type of the adjacent area, and the presence or absence of the structure at the boundary.

The first area AR1 includes divisions (addresses ADR110 to ADR129), the second area AR2 includes divisions (addresses ADR211 to ADR215), and the third area AR3 includes a division (address ADR311). All the divisions are designated by their own addresses. Each of the divisions (ADR110 to ADR129) of the first area AR1 is adjacent to at least one other division (ADR110 to ADR129) of the first area AR1. In many cases, the first area AR1 and the third area AR3 are distinguished from the second area AR2 by a structure such as a wall, a partition, or a mark on the floor surface. Such structure can be recognized by the work body 310 and the worker 340. The map 300M can include, for each of the divisions, arrangement information such as coordinates indicating a boundary of the division, presence or absence of the structure at the boundary, a height of the structure at the boundary, and an address of an adjacent division adj acent to the division as structure information of the work area 300. Further, the map 300M can include, for each of the divisions, position information defining a position and a shape of a structure, for example, a floor surface, a ceiling surface, or a wall surface of the work area 300, as the structure information of the work area 300. During the projection of the video data, the information processing device 320 may configure a three-dimensional virtual space from the position of the work body 310 to a projection direction of the video data from the structure information of the work area 300 on the basis of the detection information (specifically, the position information of the work body 310 and the position information of the worker 340).

The shape of the passage will be described. The division (ADR112) is a so-called crossing. The division (ADR114) is a so-called T-shaped path. The division (ADR120) is a right-angle turning path.

The map 300M indicates, via the detection information (specifically, the position information of the work body 310 and the position information of the worker 340), that the work body 310 is located in the division (ADR123) and the worker 340 is located in the division (ADR311) of the third area AR3.

The map 300M can be updated by the detection information from the acquisition unit 1212A.

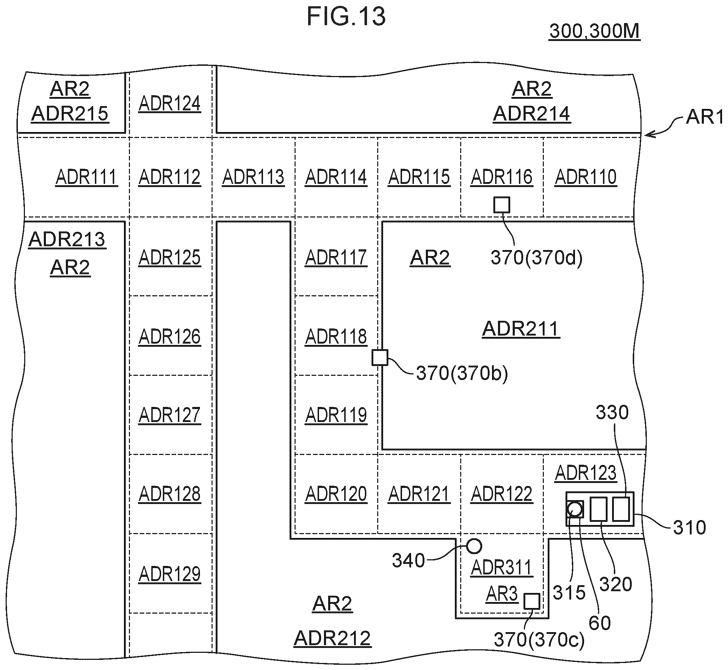

Fig. 13 is a diagram schematically illustrating the work area 300. In addition to the work body 310 and the worker 340, objects 370 (for example, movable loads) different from the work body 310 and the worker 340 may be placed in the work area 300. Referring to Fig. 13, the objects 370 (370b, 370c, and 370d) are placed in the work area 300. Specifically, the object 370 (370c) is placed in the third area AR3. The object 370 (370c) does not impede passing through the first area AR1. The object 370 (370b) is placed at a boundary between a division (ADR118) of the first area AR1 and a division (ADR211) of the second area AR2. The object 370 (370d) is placed in the division (ADR116) of the first area AR1.

The acquisition unit 1212A can acquire position information of an object (for example, the object 370) different from the work body 310 and the worker 340 as the detection information. The calculation unit 1212B determines whether or not at least a part of the object 370 is located in the first area AR1 on the basis of the position information of the object 370. In a case in which the determination indicates that the object 370 is located in the first area AR1, the calculation unit 1212B can add the position information of the object 370 to the structure information. The presence or absence of the predetermined relationship can be determined by additionally using the position information of the object 370.

In the information processing device 320, the control unit 1212C detects whether or not the positional relationship between the work body 310 and the worker 340 is the predetermined relationship on the basis of information of the map 300M. In a case in which the detection indicates that the positional relationship is the predetermined relationship, the control unit 1212C gives the video data of the video light to the light projection device 315, and the light projection device 315 performs projection as the alert information. The projected light emitted from the light projection device 315 is projected on a structure located in a projection direction of the light projection device 315. The projection direction of the light projection device 315 is specified using information related to the position of the work body 310, the position of the worker 340, and a position of one or a plurality of structures that is near the work body 310 and the worker 340 and can be visually recognized by the worker 340. The pieces of information of these positions are stored in the map 300M.

The exemplary video data can include data that enables projection mapping. The projection mapping can reduce distortion of an image due to an incident angle of the projected light on a projection surface and a shape of the projection surface, whereby it is possible to increase a possibility of attracting attention of the worker 340.

Specifically, the control unit 1212C instructs the calculation unit 1212B to prepare the video data of the video light emitted from the light projection device 315. The video data can be prepared by any one of the following methods.

Method 1: generate the video data on the basis of at least one of the position information of the work body 310, the position information of the worker 340, or the structure information of the work area 300.

Method 2: select the video data from a plurality of pieces of candidate data on the basis of at least one of the position information of the work body 310, the position information of the worker 340, or the structure information of the work area 300.

The control unit 1212C gives an instruction related to the method to be adopted to the calculation unit 1212B. In response to the instruction from the control unit 1212C, the calculation unit 1212B prepares the video data on the basis of at least one of the position information of the work body 310, the position information of the worker 340, or the structure information of the work area 300. The calculation unit 1212B generates the video data from image basic data or selects the video data from the candidate data. The image basic data includes, for example, original data input to software that generates projection mapping image data.

The candidate data can be prepared as follows. First, the projected areas are classified on the basis of the map 300M to generate a plurality of groups. The projected areas are divided into exemplary groups, such as planar walls, concave walls that bend at approximately right angles, convex walls that bend at approximately right angles, floors, and ceilings. Specifically, the map 300M associates a division with one or a plurality of the groups described above. The created video data is associated with each of the groups as the candidate data.

The video data can be created using, for example, commercial software for projection mapping or software dedicated to the central brain 24. The exemplary information processing device 320 can store such software in the storage device.

When detecting the predetermined relationship, the information processing device 320 specifies an orientation of the light projection device 315 prior to or in addition to the preparation of the video data.

The exemplary calculation unit 1212B can generate a control variable on the basis of the position information of the work body 310 and the position information of the worker 340. This control variable can be configured to orient the light projection device 315 toward a structure of the work area 300. The light projection device 315 can be oriented by at least one of the orientation of the light projection device 315 itself or orientation of the work body 310. The video data can be provided to enable the projection mapping on the structure of the map 300M after the control variable is specified.

Specifically, the calculation unit 1212B can generate a control variable for controlling the action of the work body 310 in order to specify the orientation of the light projection device 315. Alternatively, the calculation unit 1212B can generate a control variable for controlling an operation of the driver of the light projection device 315 in order to specify the orientation of the light projection device 315. The control variable can be generated on the basis of the structure information of the work area 300 in addition to the position information of the work body 310 and the position information of the worker 340. After the orientation of the light projection device 315 is specified, the control unit 1212C provides the video data to the light projection device 315. The light projection device 315 provides the projected light based on the video data in the specified projection direction.

Typically, the video data can be configured such that the projection mapping is performed on at least one of the floor surface, the ceiling surface, or the wall surface of the work area 300. Further, the video data is configured such that the projection mapping is performed on a planar and/or curved surface (for example, a wall surface, or a column side surface) of the structure. The video data can be projected on a surface along a reference surface extending in a direction intersecting the floor surface or the ceiling surface of the work area 300.

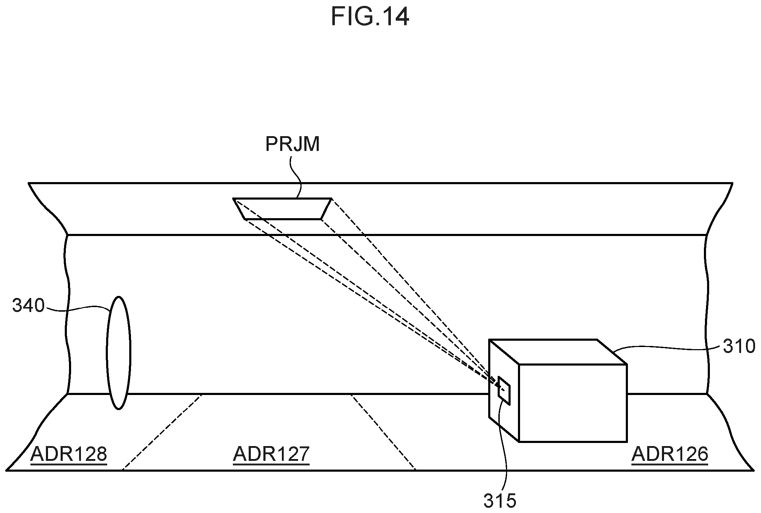

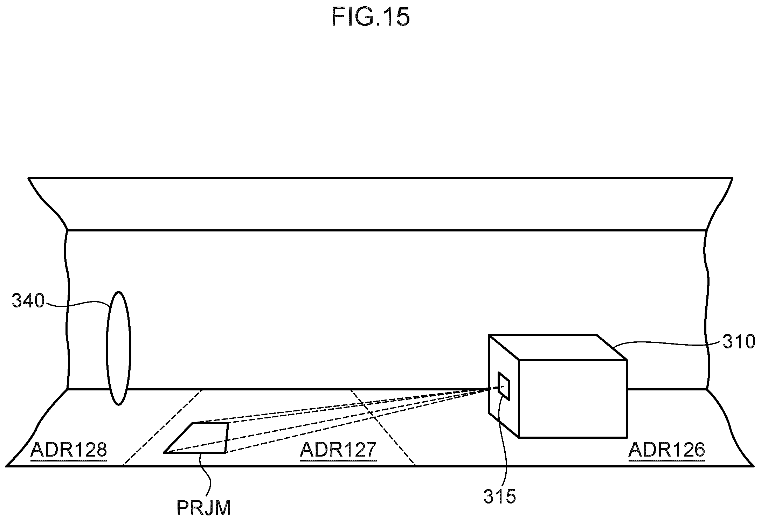

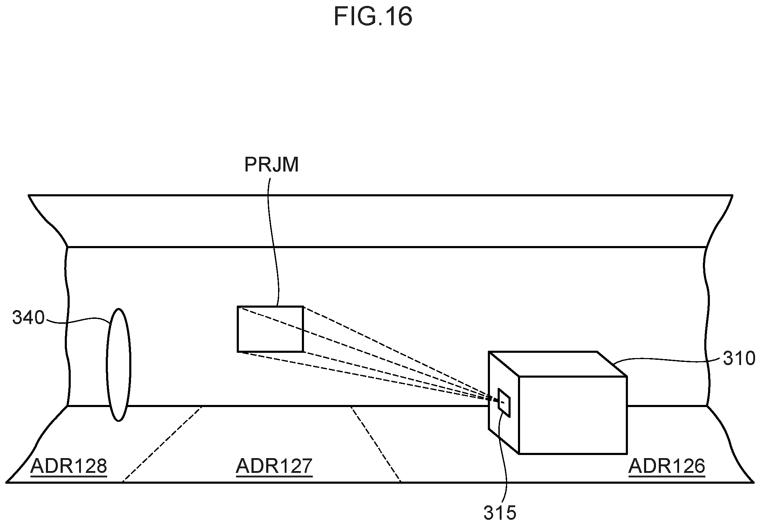

Figs. 14, 15, and 16 are diagrams schematically illustrating a scene in which the work body 310 and the worker 340 are arranged in a predetermined relationship on a straight path in the map 300M illustrated in Fig. 12. Referring to Figs. 14, 15, and 16, in a consecutive division (ADR126, ADR127, and ADR128), the work body 310 is located in the division (ADR126), and the worker 340 is located in the division (ADR128). In Fig. 14, image data is prepared to be projected and mapped on a ceiling surface of the division (ADR126) adjacent to the division (ADR127), and projected on the ceiling surface of the division (ADR127). An image PRJM is generated on the ceiling surface. In Fig. 15, the image data is prepared to be projected and mapped on a floor surface of the division (ADR126) adjacent to the division (ADR127), and projected on the floor surface of the division (ADR127). The image PRJM is generated on the floor surface. In Fig. 16, the image data is prepared to be projected and mapped on a wall side surface of the division (ADR126) adjacent to the division (ADR127), and projected on the wall side surface of the division (ADR127). The image PRJM is generated on the wall side surface.

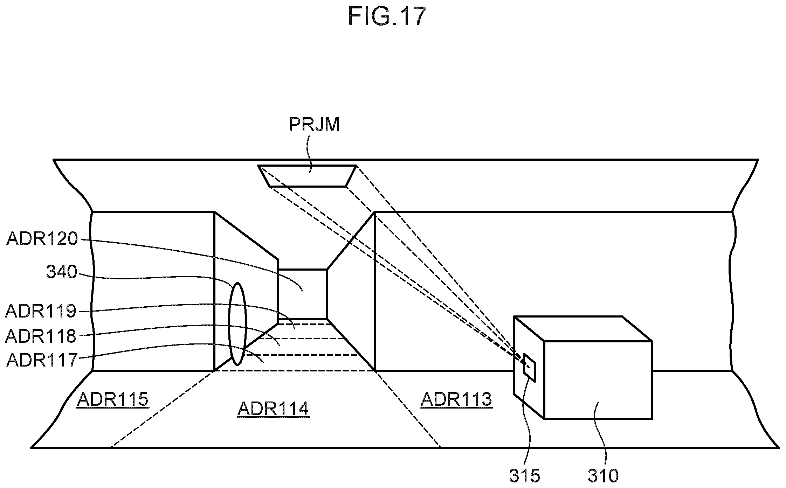

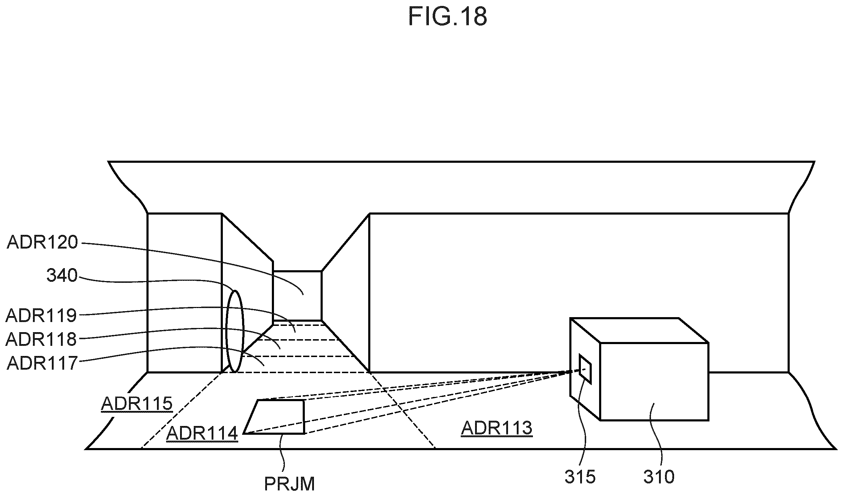

Figs. 17 and 18 are diagrams schematically illustrating a scene in which the work body 310 and the worker 340 are arranged in a predetermined relationship on a T-shaped path in the map 300M illustrated in Fig. 12. Referring to Figs. 17 and 18, a first straight path of a consecutive division (ADR117, ADR118, and ADR119) abuts against a second straight path of a continuous division (ADR113, ADR114, and ADR115) to form the T-shaped path. Near the T-shaped path, the work body 310 is located in the division (ADR113), and the worker 340 is located in the division (ADR117). In Fig. 17, the image data is prepared to be projected and mapped on a ceiling surface of the division (ADR114) adjacent to the division (ADR117), and projected on the ceiling surface of the division (ADR114). An image PRJM is generated on the ceiling surface. In Fig. 18, the image data is prepared to be projected and mapped on a floor surface of the division (ADR114) adjacent to the division (ADR117), and projected on the floor surface of the division (ADR114). The image PRJM is generated on the floor surface. Note that the image data can be prepared to be projected and mapped on a wall side surface (surface against which the first straight path abuts) of the division (ADR117) adjacent to the division (ADR114), and projected on the wall side surface.

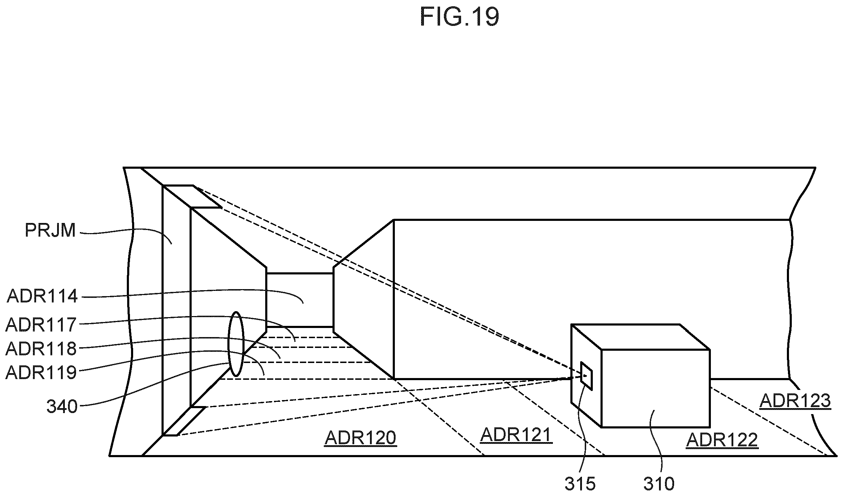

Fig. 19 is a diagram schematically illustrating a scene in which the work body 310 and the worker 340 are arranged in a predetermined relationship on a right-angle turning path in the map 300M illustrated in Fig. 12. Referring to Fig. 19, near a right-angle turning path of a straight path from a consecutive division (ADR119, ADR118, and ADR117), the work body 310 is located in the division (ADR122), and the worker 340 is located in the division (ADR119). The image data is prepared to be projected and mapped on a wall side surface of the division (ADR120) in front of the work body 310, and projected on the wall side surface (as well as a floor surface and a ceiling surface) of the division (ADR120). The image PRJM is generated across the wall side, floor, and ceiling surfaces.

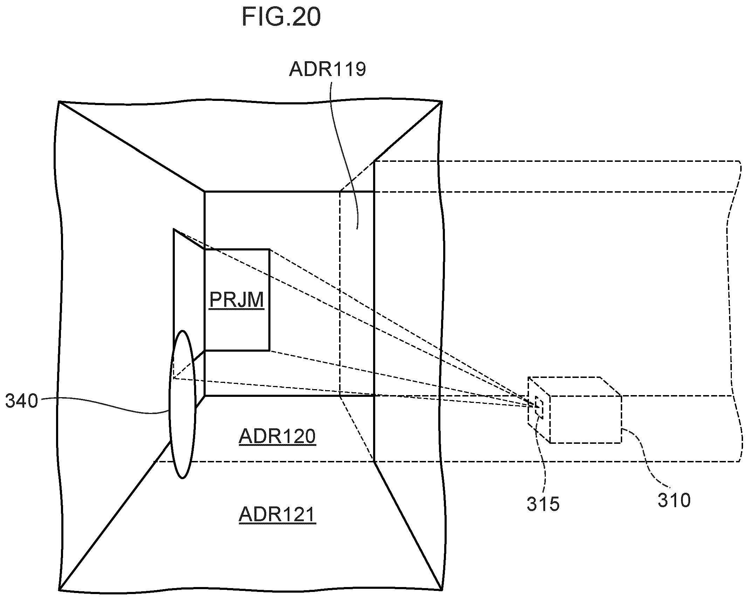

Fig. 20 is a diagram schematically illustrating a scene in which the work body 310 and the worker 340 are arranged in a predetermined relationship on the right-angle turning path in the map 300M illustrated in Fig. 12. Referring to Fig. 20, near a right-angle turning path of a consecutive division (ADR119, ADR120, and ADR121), the work body 310 is located in the division (ADR119), and the worker 340 is located in the division (ADR121). The image data is prepared to be projected and mapped on a concave corner surface of a wall side surface diagonally ahead to the right of the division (ADR120) in front of the work body 310, and projected on the concave corner surface of the wall side surface of the division (ADR120). The image PRJM is generated across two wall side surfaces.

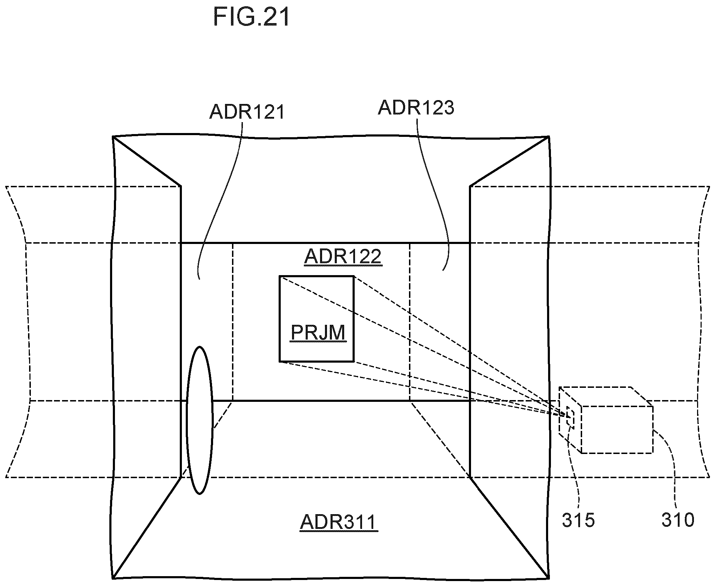

Fig. 21 is a diagram schematically illustrating a scene in which the work body 310 on the straight path and the worker 340 in a division (ADR311, for example, a rest place) adjacent to the straight path in the map 300M illustrated in Fig. 12 are arranged in a predetermined relationship. Referring to Fig. 21, the division (ADR311) is adjacent to the division (ADR122) of the straight path of a consecutive division (ADR121, ADR122, and ADR123). The work body 310 is located in the division (ADR123), and the worker 340 is located in the division (ADR311). The image data is prepared to be projected and mapped on the wall side surface of the division (ADR122) of the straight path that can be visually recognized by the worker 340 in the division (ADR311), and projected on the wall side surface of the division (ADR122). The image PRJM is generated on the wall side surface.

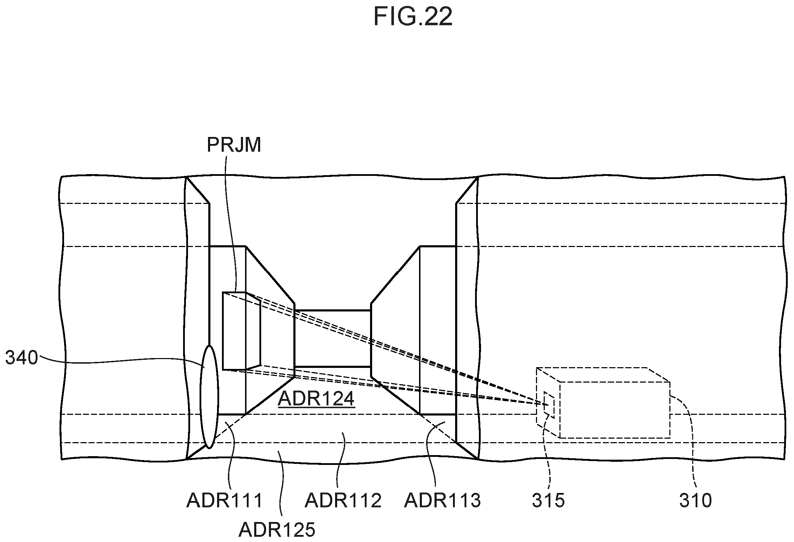

Fig. 22 is a diagram schematically illustrating a scene in which the work body 310 and the worker 340 are arranged in a predetermined relationship at the crossing in the map 300M illustrated in Fig. 12. Referring to Fig. 22, a straight path of a consecutive division (ADR124, ADR112, and ADR125) and a straight path of a consecutive division (ADR111, ADR112, and ADR113) intersect at the division (ADR112). The work body 310 is located in the division (ADR113), and the worker 340 is located in the division (ADR125). The image data is prepared to be projected and mapped on a convex corner surface on the right at a crossing of the division (ADR112), and projected on the convex corner surface at the crossing that can be visually recognized by the worker 340 in the division (ADR125). The image PRJM is generated on two adjacent wall side surfaces.

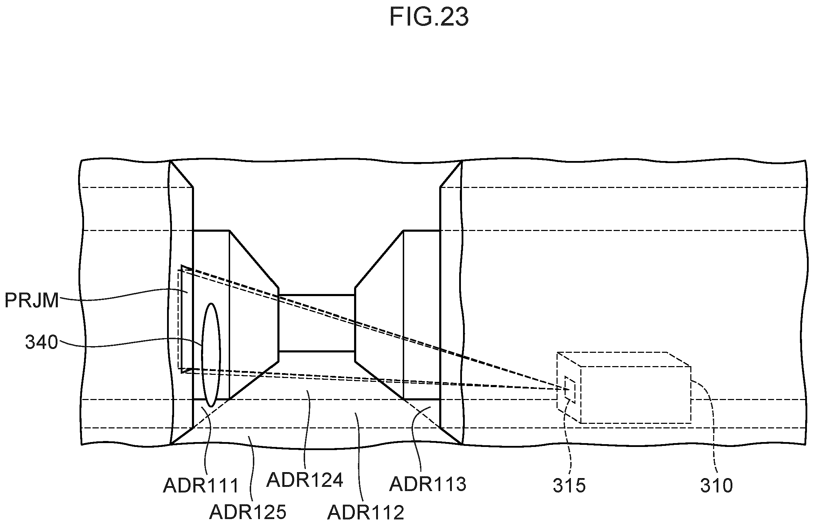

Fig. 23 is a diagram schematically illustrating a scene in which the work body 310 and the worker 340 are arranged in a predetermined relationship at the crossing in the map 300M illustrated in Fig. 12. Referring to Fig. 23, the straight path of the consecutive division (ADR124, ADR112, and ADR125) and the straight path of the consecutive division (ADR111, ADR112, and ADR113) intersect at the division (ADR112). The work body 310 is located in the division (ADR113), and the worker 340 is located in the division (ADR111). The image data is prepared to be projected and mapped on a convex corner surface on the left at the crossing of the division (ADR112), and projected on the convex corner surface at the crossing that can be visually recognized by the worker 340 in the division (ADR111). The image PRJM is generated on two adjacent wall side surfaces.

The image data can be projected to avoid the object 370 placed in the first area AR1, if possible.

In a case in which the map 300M is not provided, the information processing device 320 can operate as follows. In response to the detection of the information processing device 320 indicating that the work body 310 and the worker 340 are arranged in the predetermined relationship, the information processing device 320 may construct a local map. The local map can be constructed on the basis of additional detection information from a sensor of the work body 310 in addition to the detection information from the arrangement in the predetermined relationship, specifically, detection information such as the position information of the work body 310 and the position information of the worker 340. The local map can further include a three-dimensional local virtual space including the work body 310 and the worker 340. In the three-dimensional local virtual space, the information processing device 320 can specify the projection direction of the video data, a projection target of the video data, and a shape of a projected surface of the projection target, and generate the video data that conforms to the projection direction and the shape of the projected surface. Such operation enable the information processing device 320 to provide the projections as illustrated in Figs. 14 to 23 in the case in which the map 300M is not provided.

Such operation can also be performed in a case in which the map 300M is provided.

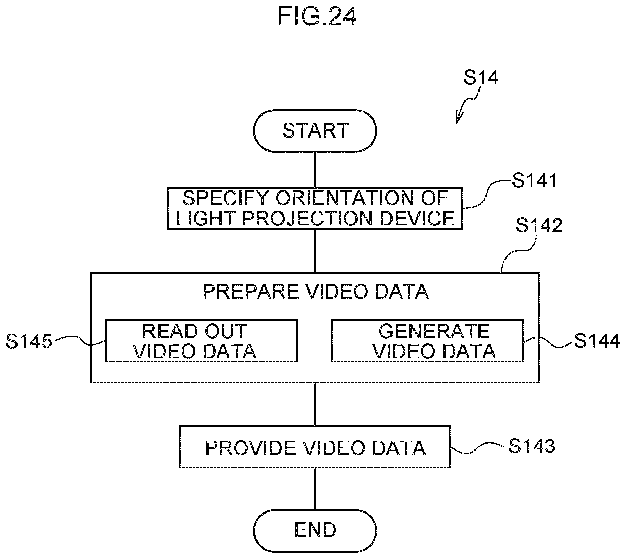

Next, a flow of processing to be executed by the computer 1200 functioning as the central brain 24 will be described. In the computer 1200, the CPU 1212 reads out the program installed in the computer 1200, and develops and executes the program in the RAM 1214, thereby executing the processing of the flowchart illustrated in Fig. 24. This flowchart illustrates details of step S14.

In step S141, the CPU 1212 calculates a control variable. The control unit 1212C orients the light projection device 315 of the work body 310 on the basis of the control variable. The CPU 1212 proceeds to step S142.

In step S142, the CPU 1212 prepares the video data, and proceeds to step S143.

In step S143, the CPU 1212 provides the video data to the light projection device 315.

In step S142, preparing the video data can be either generating the video data in step S144 or reading out the video data (selecting the video data) in step S145.

As described above, in the computer 1200 functioning as the central brain 24 according to the fifth embodiment, the CPU 1212 acquires the detection information obtained by detecting the positional relationship in the work area 300 between the worker 340 and the work body 310 that works together with the worker 340 in the work area 300. Then, the CPU 1212 causes the work body 310 to act to urge the worker 340 to pay attention on the basis of the acquired detection information.

### (Sixth Embodiment)

In the description of the sixth embodiment according to the present embodiment, the same or similar portions are denoted by the same or similar reference numerals, and redundant description will be omitted.

In the following description, the forklift 10 according to the first embodiment and the humanoid robot 1 according to the second embodiment are examples of the "work body". The worker is an example of the "human", and the factory is an example of the "work area". The central brain 24 predicts and determines the best mix of situations every nanosecond (one-billionth of a second) by the artificial intelligence (AI), and optimizes the actions of the work bodies such as the forklift 10 and the humanoid robot 1. Further, the central brain 24 is an example of the information processing device. As already described, it is possible to process the plurality of types of detection information by the AI, and accumulate the processed data in the cloud 500. As illustrated in Fig. 6, the information processing device can include the hardware configuration of the computer 1200 functioning as the central brain 24.

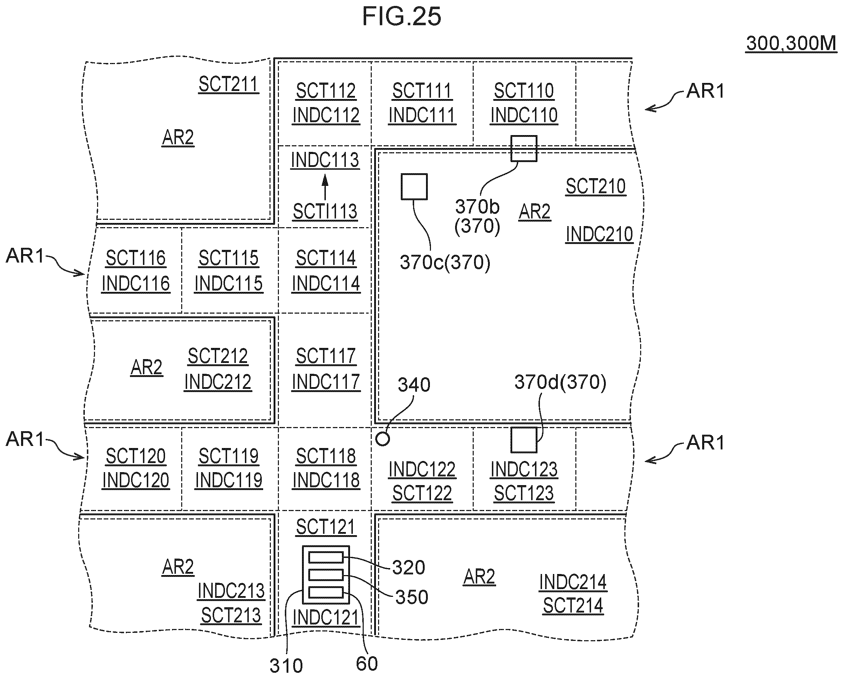

Fig. 25 is a diagram schematically illustrating the work area 300. In the work area 300, the work body 310 is disposed. The work body 310 includes the information processing device 320 and one or a plurality of sensor devices 350. The sensor device 350 can include the sensors described in the first and second embodiments.

As illustrated in Fig. 7, the information processing device 320 includes the acquisition unit 1212A and the control unit 1212C. The acquisition unit 1212A acquires detection information detected by the sensor device 350 including the sensors 35, the sensors 55, and other sensors every nanosecond during the actions of the work body 310. Specifically, the acquisition unit 1212A acquires the detection information obtained by detecting the positional relationship in the work area 300 between the worker 340 and the work body 310 that works together with the worker 340 in the work area 300. The detection information is captured by various sensors that obtain the detection information that has been already described or to be described.

The control unit 1212C controls the actions of the work body 310 in a unit of nanosecond on the basis of the control variable calculated by the calculation unit 1212B. Specifically, the control unit 1212C causes the work body 310 to act to urge the worker 340 to pay attention based on the detection information. Specifically, as described above, in the case in which the positional relationship between the work body 310 and the worker 340 is the predetermined relationship on the basis of the detection information, the control unit 1212C can cause the notification unit 60 mounted on the work body 310 to notify the worker 340 of the alert information that urges the worker 340 to pay attention.

Referring to Fig. 25, the map 300M schematically illustrating the configuration information of the work area 300 is shown. The map 300M can be stored in the information processing device 320 and the cloud 500. The map 300M can be updated on the basis of the detection information, and the updated map 300M is sent to the cloud 500. The map 300M can be given in advance as the configuration information of the work area 300, or can be created on the basis of the detection information.

Referring to the map 300M, in the exemplary information processing device 320, the work area 300 includes the first area AR1 through which the work body 310 and the worker 340 can pass together in the work area 300, and the second area AR2 through which the work body 310 cannot pass. The second area AR2 can include the area through which the worker 340 can pass and the area through which the worker 340 cannot pass. The first area AR1 includes, for example, a passage, and the second area AR2 includes, for example, an area in which devices and products in the work area 300 are arranged. In the second area AR2, for example, the worker 340 can work. The map 300M includes the position information of the first area AR1 and the position information of the second area AR2. By using these pieces of position information, the map 300M can be used as map information. While the work body 310 cannot pass through the second area AR2, detection information of the second area AR2 may be partially acquired.

The first area AR1 includes sections (SCT110 to SCT123), and the second area AR2 includes sections (SCT210 to SCT214). Each of the sections (SCT110 to SCT123) in the first area AR1 is adjacent to at least one other section (SCT110 to SCT123) in the first area AR1.

The map 300M (configuration information of the work area) indicates, via the detection information (specifically, the position information of the work body 310 and the position information of the worker 340), that the work body 310 is located in the section (SCT121) and the worker 340 is located in the section (SCT122).

In the position information of the first area AR1 and the position information of the second area AR2, the sections (SCT110 to SCT123 and SCT210 to SCT214) are associated with respective indicators regarding the safety of the worker 340 in the positional relationship between the work body 310 and the worker 340. Specifically, the position information of the first area AR1 and the position information of the second area AR2 can include indicators for respective sections (SCT110 to SCT123 and SCT210 to SCT214). Specifically, the exemplary indicators can each represent a level of attracting attention of the worker 340 (in other words, a risk for the worker 340) in a case in which the positional relationship between the work body 310 and the worker 340 satisfies the predetermined relationship. Here, an exemplary positional relationship meeting the predetermined relationship is that the distance between the work body 310 and the worker 340 in the work area 300 is within the predetermined range. However, the acquisition unit 1212A can acquire the detection information from an area beyond a predetermined range set in advance. Specifically, the acquisition unit 1212A acquires the detection information so as to include information on the structure of the work area 300 (for example, the visibility of the passage and the width of the passage) that may impede the detection of the predetermined relationship or increase the difficulty of the detection.

In the exemplary map 300M, the sections (SCT110 to SCT123 and SCT210 to SCT214) respectively include indicators (INDC110 to INDC123 and INDC210 to INDC214). The indicators can each be represented by, for example, a numerical value or a symbol. The indicators can each be reflected in the level of attracting attention when the notification unit 60 urges the worker 340 to pay attention. In the following description, the exemplary indicators are each set such that a level of the indicator becomes higher in a scene in which the degree of safety of the worker 340 is lowered in the case in which the positional relationship between the work body 310 and the worker 340 meets the predetermined relationship. In accordance with the level of the indicator, for example, the notification of the alert information such as a series of voices, repetition of voices, combination of voices and light, and combination of voices and blinking light is made to attract attention. For example, the indicators at certain levels can be given in advance to all the sections, and the indicators may be updated thereafter.

The calculation unit 1212B can generate the control variable for controlling the actions of the work body 310 on the basis of the indicator (for example, INDC121) of the section (for example, SCT121) in which the work body 310 is located, the position information of the work body 310 and the worker 340, as well as the configuration information of the work area 300. The work body 310 acts according to the control variable.

The calculation unit 1212B can generate the indicator (for example, INDC121) of the section (for example, SCT121) in which the work body 310 is located before generating the control variable. Further, the calculation unit 1212B can add the generated indicator to the position information (first position information or second position information) of the first area AR1 or the second area AR2. When the work body 310 proceeds to the next section, the calculation unit 1212B performs the calculation. The indicator (for example, INDC122) of the section can be generated, and the indicator can be added to the position information (the first position information or the second position information) of the first area AR1 or the second area AR2. In a case in which the section includes the indicator, the indicator can be updated to a new indicator, and updates in the work area 300 are reflected in the map 300M. The calculation unit 1212B can generate the control variable after the update. The work body 310 acts according to the control variable from the updated indicator.

The indicators are given to the position information of the first area AR1 and the position information of the second area AR2 by giving the indicators and updating the indicator for each of the sections as the work body 310 moves.

A shape of the exemplary first area AR1 will be described with reference to the map 300M. The first area AR1 includes a straight path formed by the sections (SCT110 and SCT111). The straight path is connected to another straight path formed by the section (SCT113) via the section (SCT112, junction). The section (SCT112, junction) is configured to bend a row of the sections (SCT110 and SCT111) at a right angle.

In the section (SCT112), the detection information indicates that the section (SCT112) is located at the corner of the passage. It is determined, via the detection information, that the safety of the worker 340 in the positional relationship between the work body 310 and the worker 340 is not high at the corner of the passage, and the level of the indicator is increased according to the determination.

The first area AR1 further includes a straight path formed by the sections (SCT116 and SCT115). The straight path is connected to the respective straight paths formed by the section (SCT113) and the section (SCT117) via the section (SCT114, junction). In the section (SCT114), the section (SCT113, SCT115, and SCT117) forms a so-called T-shaped path.

In the section (SCT114), the detection information indicates that the section (SCT114) is located on the T-shaped path. It is determined, via the detection information, that the safety of the worker 340 in the positional relationship between the work body 310 and the worker 340 is not high on the T-shaped path, and the level of the indicator is increased as compared to that at the corner of the passage according to the determination.

Moreover, the first area AR1 includes a straight path formed by the sections (SCT119 and SCT120), a straight path formed by the sections (SCT122 and SCT123), and a straight path formed by the section (SCT121). These straight paths are connected to the section (SCT117) via the section (SCT118, junction). In the section (SCT118), the sections (SCT117, SCT119, SCT121 and SCT122) form a so-called crossing.

In the section (SCT118), the detection information indicates that the section (SCT118) is located at the crossing. It is determined, via the detection information, that the safety of the worker 340 in the positional relationship between the work body 310 and the worker 340 is not high at the crossing, and the level of the indicator is increased as compared to that on the T-shaped path according to the determination.

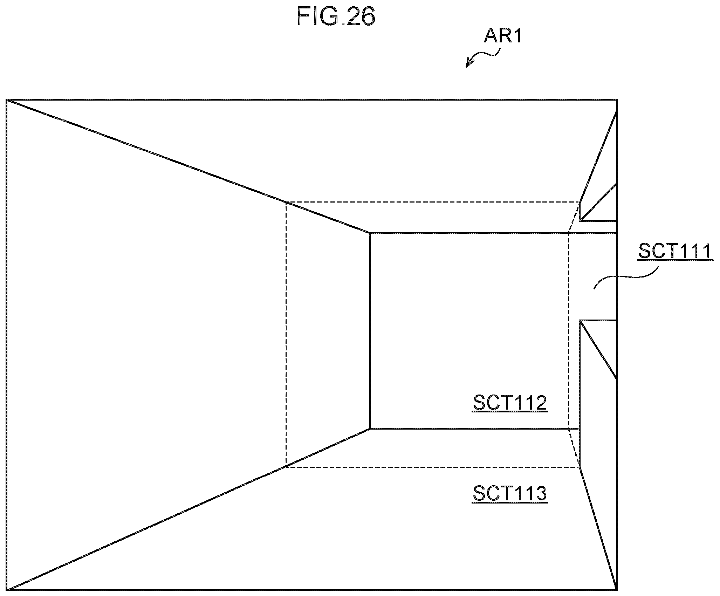

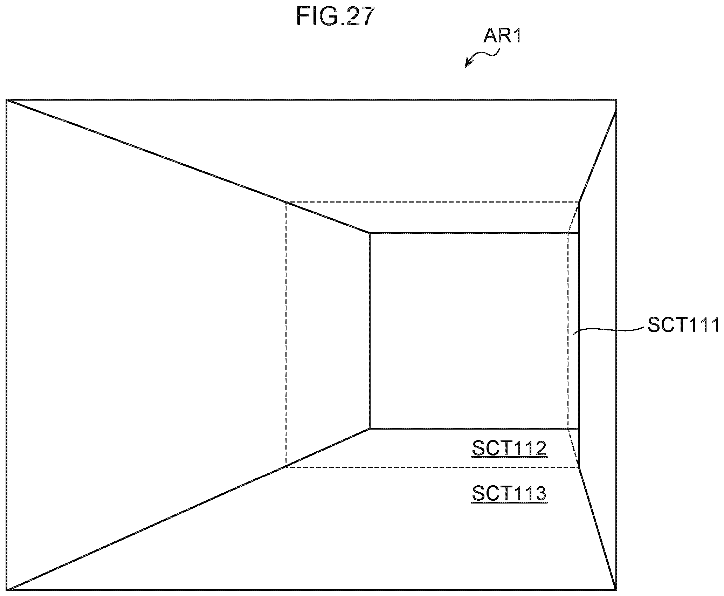

Figs. 26 and 27 are diagrams schematically illustrating the corner section and the adjacent section of the first area in the configuration information of the work area.

Referring to Fig. 26, one of the work body 310 and the worker 340 located in the section (SCT113) can visually recognize the other of the work body 310 and the worker 340 located in the section (SCT111). There is a field of view from one of the section (SCT113) and the section (SCT111) to the other of the section (SCT113) and the section (SCT111). Specifically, the work body 310 located in one of the section (SCT113) and the section (SCT111) can detect that there is a field of view to the other of the section (SCT113) and the section (SCT111) on the basis of the detection information. For example, positions of the walls defining the first area AR1 can be detected from the work body 310 on the basis of the detection information. For example, the detection information indicates that the positions of the walls defining the first area AR1 located in the section (SCT111) are far from the work body 310.

At a corner (similarly, the T-shaped path and the crossing) where the visibility is not poor, in a case in which the safety of the worker 340 in the positional relationship between the work body 310 and the worker 340 is not significantly lowered, the level of the indicator need not be increased as compared to that at the corner.

Referring to Fig. 27, one of the work body 310 and the worker 340 located in the section (SCT113) cannot visually recognize the other of the work body 310 and the worker 340 located in the section (SCT111). There is no field of view from one of the section (SCT113) and the section (SCT111) to the other of the section (SCT113) and the section (SCT111). Specifically, the work body 310 located in one of the section (SCT113) and the section (SCT111) can detect that there is no field of view to the other of the section (SCT113) and the section (SCT111) on the basis of the detection information. For example, the detection information indicates that the positions of the walls (obstacles) defining the first area AR1 located in the section (SCT113) are close to the work body 310.

At a corner (similarly, the T-shaped path and the crossing) where the visibility is poor, it is determined, via the detection information, that the safety of the worker 340 is lower than that at the corner, and the level of the indicator is increased as compared to that at the corner in accordance with the determination. Specifically, the corner, the T-shaped path, and the crossing have one, two, and four turning points, respectively. The level of the indicator may be increased stepwise according to the number of the turning points where the visibility is poor.

In the exemplary information processing device 320, the acquisition unit 1212A can further acquire, as the detection information, illumination information of illuminance (for example, illuminance information) at at least one position in each of the sections (SCT110 to SCT123) of the first area AR1.

The calculation unit 1212B determines the quantity of light in the section on the basis of the illumination information, and in a case in which the determination indicates that, for example, the quantity of light is insufficient among "favorable", "normal", and "insufficient", the indicator of the section may be updated to indicate a stronger alert. The information processing device 320 can update the indicator of each of the sections (SCT110 to SCT123) of the first area AR1 on the basis of the illumination information.

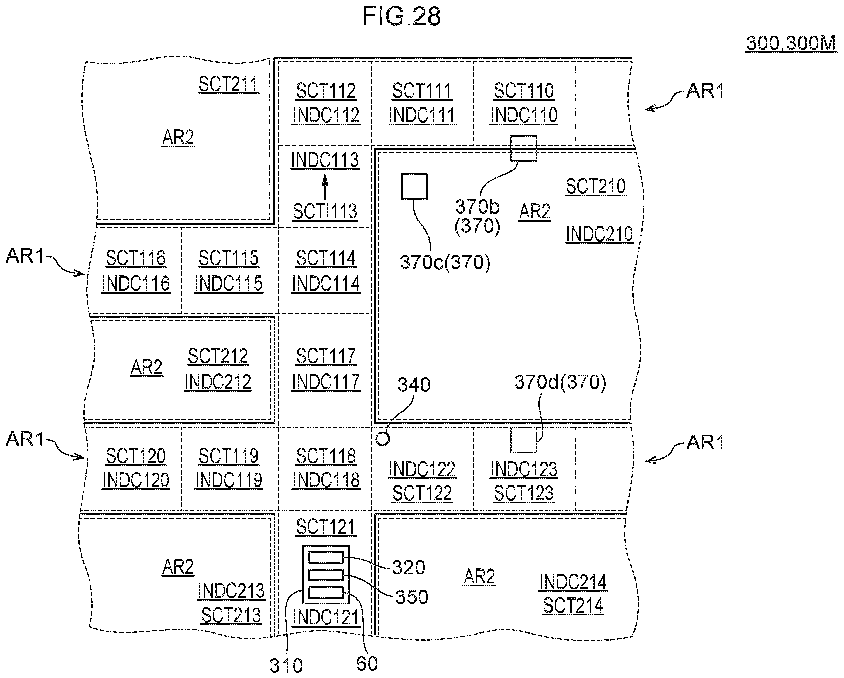

Fig. 28 is a diagram schematically illustrating the work area 300. In addition to the work body 310, the objects 370 (for example, the movable loads) different from the work body 310 and the worker 340 may be placed in the work area 300. Referring to Fig. 28, the objects 370 (370b, 370c, and 370d) are placed in the work area 300. Specifically, the object 370 (370c) is placed in the second area AR2. The object 370 (370c) does not impede the passing through the first area AR1. The object 370 (370b) is placed at the boundary between the first area AR1 and the second area AR2. The object 370 (370d) is placed in the first area AR1.

In the exemplary information processing device 320, in addition to the work body 310 and the worker 340, the acquisition unit 1212A can further acquire, as the detection information, pieces of position information of the objects 370 different from the work body 310 and the worker 340.

The calculation unit 1212B can determine whether or not the object (370b) is located in the sections (SCT110 to SCT123) of the first area AR1 on the basis of the position information of the object 370 (370b), and update, in a case in which the determination indicates that the object 370 (370b) is located in any of the sections (SCT110 to SCT123), the indicator of the section to indicate a stronger alert. Specifically, the detection information detects that the object (370b) is placed at the boundary between the first area AR1 and the second area AR2 in the section (SCT110). In accordance with the detection, the calculation unit 1212B gives, to the section (SCT110), an indicator higher than the indicator of the section (specifically, an indicator representing the safety in the straight path).

The calculation unit 1212B further determines whether or not the object 370 (370d) is located in the sections (SCT110 to SCT123) of the first area AR1 on the basis of the position information of the object 370 (370d). In a case in which the determination indicates that the object 370 (370d) is located in a certain section of the sections (SCT110 to SCT123), the calculation unit 1212B can update the indicator of the section to indicate a stronger alert. Specifically, the detection information indicates that the object 370 (370d) is placed in the first area AR1 in the section (SCT123). In accordance with the detection, the calculation unit 1212B gives, to the section (SCT123), an indicator higher than an indicator indicating an alerting level of the section (SCT110).

As understood from the above description, the exemplary information processing device 320 can determine exemplary items such as the shape of the passage, the visibility, the brightness of the illumination, and protrusion of an article into the first area, and update the indicator. Accordingly, the calculation unit 1212B can set an alerting level for each of the sections (SCT110 to SCT123) in the first area AR1 as the indicator, or can update the indicator from a viewpoint of the degree of safety of the worker 340.

The calculation unit 1212B is configured to generate a control variable on the basis of the indicators, the position information of the work body 310, the position information of the worker 340, and the configuration information of the work area 300. The work body 310 acts according to the generated control variable. The control variable can be generated to cause the work body 310 to perform at least one exemplary operation of setting, pausing, slowing-down, or detouring the warning mode, or delivering at least one of a sound or light from the notification unit. Specifically, in a case in which the indicator generated on the basis of the detection information acquired by the work body 310 exceeds a certain value, the work body 310 may be set to the warning mode and move. In the warning mode, deceleration traveling and/or warning notification can be performed. Further, before the control variable is generated, the detection information may be acquired, and the indicator may be updated from the acquired detection information.

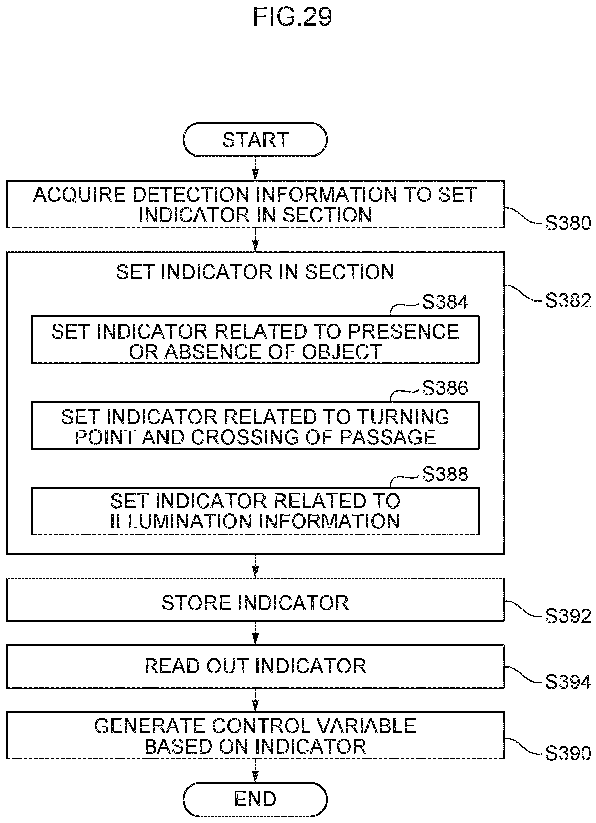

Next, a flow of processing to be executed by the computer 1200 functioning as the central brain 24 will be described. In the computer 1200, the CPU 1212 reads out the program installed in the computer 1200, and develops and executes the program in the RAM 1214, thereby executing the processing of the flowchart illustrated in Fig. 29.

In step S380, the CPU 1212 acquires the detection information detected by the sensors 35, the sensors 55, and other sensors. Then, the CPU 1212 proceeds to step S382.

In step S382, the CPU 1212 calculates the indicator on the basis of the detection information acquired in step S380. Then, the CPU 1212 proceeds to step S390. To calculate the indicator, specifically, it is possible to calculate at least one of an indicator related to the presence or absence of the object 370 in step S384, an indicator related to a turning point and a crossing of the passage in step S386, or an indicator related to the illumination information in step S388.

In step S390, the CPU 1212 calculates the control variable on the basis of the detection information acquired in step S380 and the indicator calculated in step S382. Next, the CPU 1212 controls the actions of the work body 310 on the basis of the control variable calculated in step S390.

Prior to step S390, the calculated indicator can be stored in the storage device 1224 or the cloud 500 in step S392.

Prior to step S390, in step S394, the indicator can be read out from the storage device 1224 or the cloud 500.

As described above, in the computer 1200 functioning as the central brain 24 according to the sixth embodiment, the CPU 1212 acquires the detection information obtained by detecting the positional relationship in the work area 300 between the worker 340 and the work body 310 that works together with the worker 340 in the work area 300. Then, the CPU 1212 causes the work body 310 to act to urge the worker 340 to pay attention on the basis of the acquired detection information.

### (Others)

The blocks in the flowcharts and the block diagrams in the present embodiment may represent stages of the processes in which the operations are executed or "units" of a device that are responsible for executing the operations. The specific stages and "units" may be implemented by a dedicated circuit, a programmable circuit provided with computer-readable instructions stored in a computer-readable storage medium, and/or a processor provided with the computer-readable instructions stored in the computer-readable storage medium. Examples of the dedicated circuit may include digital and/or analog hardware circuits, and may include integrated circuits (ICs) and/or discrete circuits. Examples of the programmable circuit may include reconfigurable hardware circuits including, for example, AND, OR, exclusive OR, NAND, NOR, and other logical operation circuits, flip-flops, registers, and memory elements, such as field programmable gate arrays (FPGAs) and programmable logic arrays (PLAs).

Examples of the computer-readable storage medium may include any tangible device capable of storing instructions to be executed by a suitable device, whereby the computer-readable storage medium having the instructions stored therein includes a product having instructions that can be executed to create a means for executing the operations specified in the flowcharts or the block diagrams. Examples of the computer-readable storage medium may include an electronic storage medium, a magnetic storage medium, an optical storage medium, an electromagnetic storage medium, and a semiconductor storage medium. More specific examples of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, and an integrated circuit card.

Examples of the computer-readable instructions may include assembler instructions, instruction-set-architecture (ISA) instructions, machine instructions, machine-dependent instructions, microcode, firmware instructions, state-setting data, or either a source code or an object code written in any combination of one or a plurality of programming languages, including object-oriented programming languages such as Smalltalk (registered trademark), JAVA (registered trademark), and C++, and a conventional procedural programming language such as a "C" programming language or a similar programming language.

The computer-readable instructions may be provided to a processor or a programmable circuit of a general purpose computer, a special purpose computer, or other programmable data processing devices for executing the computer-readable instructions either locally or via a local area network (LAN) or a wide area network (WAN) such as the Internet such that the processor or the programmable circuit of the general purpose computer, the special purpose computer, or other programmable data processing devices create a means for executing the operations designated in the flowcharts or the block diagrams. Examples of the processor include a computer processor, a processing unit, a microprocessor, a digital signal processor, a controller, and a microcontroller.

Although the disclosure has been described with reference to the embodiments above, the technical scope of the disclosure is not limited to the scopes described in the embodiments. It is apparent to a person skilled in the art that various modifications or improvements can be made to the above embodiments. It is apparent from the description of the claims that modes to which such modifications or the improvement are added can also be included in the technical scope of the disclosure.

It should be noted that the order of the execution of each processing including the operations, the procedures, the steps, and the stages in the devices, the systems, the programs, and the methods shown in the claims, the description, and the drawings can be achieved in any order unless "before", "prior to", or the like is explicitly stated, and unless the output of the previous processing is used in the later processing. Even if the operation flows in the claims, the description, and the drawings are described using "first,", "next,", and the like for convenience, this does not mean that the operation flows are essentially performed in this order.

**In** the above embodiments, the notification unit 60 is a speaker, and the disclosure is not limited thereto. The notification unit 60 may be a monitor capable of displaying the alert information or a lamp capable of making the notification of the alert information.

**In** the above embodiments, the alert information is the predetermined warning sound (beep sound), and the disclosure is not limited thereto. The alert information may be a predetermined sound (for example, danger, please be careful) by the human or predetermined light (for example, light emission in red, and light emission at a high speed) by the lamp.

The disclosure of Japanese Patent Application No. 2022-196679 filed on December 8, 2022, the disclosure of Japanese Patent Application No. 2023-006168 filed on January 18, 2023, the disclosure of Japanese Patent Application No. 2023-008910 filed on January 24, 2023, the disclosure of Japanese Patent Application No. 2023-087264 filed on May 26, 2023, and the disclosure of Japanese Patent Application No. 2023-087265 filed on May 26, 2023 are entirely incorporated herein by reference.

All the documents, the patent applications, and the technical standards described herein are incorporated herein by reference to the same extent as in a case in which each of the documents, the patent applications, and the technical standards are specifically and individually described to be incorporated by reference.

## Claims

1. An information processing device comprising:
an acquisition unit that acquires detection information obtained by detecting a positional relationship in a work area between a human and a work body working together with the human in the work area; and
a control unit that causes, on the basis of the detection information acquired by the acquisition unit, a notification unit mounted on the work body to notify the human of alert information that urges the human to pay attention in a case in which the positional relationship is a predetermined relationship.

2. The information processing device according to claim 1, wherein the case in which the positional relationship is the predetermined relationship is a case in which a distance between the work body and the human in the work area is within a predetermined range.

3. The information processing device according to claim 2, wherein the case in which the positional relationship is the predetermined relationship is a case in which the distance between the work body and the human in the work area is within the predetermined range, and there is a possibility that the work body and the human come into contact with each other.

4. The information processing device according to claim 3, wherein the case in which there is a possibility that the work body and the human come into contact with each other is a case in which a time to collision between the work body and the human has a predetermined value or smaller.

5. The information processing device according to claim 4, wherein the control unit changes content of the alert information that is caused to be notified by the notification unit, according to the possibility that the work body and the human come into contact with each other.

6. The information processing device according to claim 1, wherein the alert information includes at least one of a predetermined warning sound, a predetermined voice from the human, or predetermined light.

7. The information processing device according to claim 1, wherein the control unit causes the notification unit to notify, of alert information notified in the past, another human who works in the same area as an area where a human who was notified of the alert information in the past worked.

8. The information processing device according to claim 7, wherein the control unit causes the notification unit to make notification that the alert information was notified in the same area in the past.

9. The information processing device according to claim 8, wherein the control unit changes a mode of the notification of the alert information according to a notification frequency or a number of times of the notification of the alert information in the same area in the past.

10. The information processing device according to claim 7, wherein the control unit determines, in a case in which a plurality of pieces of alert information were notified in the past, whether to cause the notification unit to make notification of all the pieces of alert information or only some of the pieces of alert information according to a state of the human.

11. The information processing device according to claim 2, wherein the control unit outputs, in the case in which the positional relationship is the predetermined relationship, video data of video light emitted from a light projection device included in the notification unit as the alert information.

12. The information processing device according to claim 11, wherein the video data includes data that enables projection mapping.

13. The information processing device according to claim 12, wherein the video data is configured such that the projection mapping is performed on at least one of a floor surface, a ceiling surface, or a wall surface of the work area.

14. The information processing device according to claim 12, wherein the video data is configured such that the projection mapping is performed on a corresponding surface of a structure including a surface along a reference surface extending in a direction intersecting the floor surface of the work area.

15. The information processing device according to claim 12, further comprising a calculation unit configured to generate a control variable for controlling an action of the work body to specify an orientation of the light projection device on the basis of position information of the work body and position information of the human, wherein
the control unit provides the video data to the light projection device after the orientation of the light projection device of the notification unit is specified.

16. The information processing device according to claim 15, wherein the calculation unit is configured to generate the control variable on the basis of structure information of the work area in addition to the position information of the work body and the position information of the human,
the structure information of the work area includes position information of a structure that divides the work area into a first area through which the work body and the human can pass in the work area and a second area through which the work body cannot pass in the work area, and position information of a structure of the work area, and
the control variable is configured to orient the light projection device toward the structure.

17. The information processing device according to claim 16, wherein the video data is provided to enable the projection mapping on the structure after the control variable is specified.

18. The information processing device according to claim 16, wherein the structure information is updated by the detection information from the acquisition unit.

19. The information processing device according to claim 16, wherein the calculation unit is configured to prepare the video data on the basis of at least one of the position information of the work body, the position information of the human, or the structure information of the work area.

20. The information processing device according to claim 19, wherein the video data is generated by the calculation unit on the basis of at least one of the position information of the work body, the position information of the human, or the structure information of the work area.

21. The information processing device according to claim 19, wherein the video data is selected from a plurality of pieces of candidate data on the basis of at least one of the position information of the work body, the position information of the human, or the structure information of the work area.

22. The information processing device according to claim 16, wherein the acquisition unit further acquires, as the detection information, position information of an object different from the work body and the work area in addition to the position information of the work body and the position information of the human, and
the calculation unit determines whether or not at least a part of the object is located in the first area on the basis of the position information of the object, and adds the position information of the object to the structure information in a case in which the determination indicates that the object is located in the first area.

23. The information processing device according to claim 1, wherein the control unit causes the work body to act to urge the human to pay attention on the basis of the detection information acquired by the acquisition unit.

24. The information processing device according to claim 23, wherein the control unit causes the notification unit mounted on the work body to notify the human of the alert information that urges the human to pay attention in the case in which the positional relationship is the predetermined relationship on the basis of the detection information acquired by the acquisition unit.

25. The information processing device according to claim 23, wherein the detection information includes the position information of the work body, the position information of the human, and configuration information of the work area,
the configuration information of the work area includes position information of the first area through which the work body and the human can pass in the work area and position information of the second area through which the work body cannot pass in the work area,
the first area includes a plurality of sections,
the second area includes at least one section,
the position information of the first area and the position information of the second area include, for each of the sections, indicators related to safety in the positional relationship between the work body and the human, and
the information processing device further includes the calculation unit configured to generate the control variable for controlling the action of the work body on the basis of the indicators, the position information of the work body, the position information of the human, and the configuration information of the work area.

26. The information processing device according to claim 23, wherein the detection information includes the position information of the work body, the position information of the human, and the configuration information of the work area,
the configuration information of the work area includes the position information of the first area through which the work body and the human can pass in the work area and the position information of the second area through which the work body cannot pass in the work area,
the first area includes the plurality of sections,
the second area includes the at least one section,
the information processing device further includes the calculation unit configured to generate, on the basis of first position information in each of the sections of the first area and second position information of the section of the second area, an indicator related to the safety in the positional relationship between the work body and the human for each of the sections of the first area, and add the indicator to the first position information, and
the calculation unit is configured to generate the control variable for controlling the action of the work body on the basis of the indicator, the position information of the work body, the position information of the human, and the configuration information of the work area.

27. The information processing device according to claim 25, wherein the sections of the first area includes a first section, a second section, and a third section adjacent to the first section and the second section,
the first section represents a first passage running in a first direction,
the second section represents a second passage running in a second direction different from the first direction,
the third section represents a junction of the first passage and the second passage, and
an indicator of the third section is set to indicate a stronger alert than an indicator of the first section and an indicator of the second section.

28. The information processing device according to claim 27, wherein the acquisition unit further acquires, as the detection information, position information of an obstacle between the first section and the second section in one of the first section and the second section, and
the calculation unit determines presence or absence of a field of view from one of the first section and the second section to the other on the basis of the position information of the obstacle in the configuration information of the work area, and updates the indicator of the third section to indicate a stronger alert in a case in which the determination indicates that the field of view is absent.

29. The information processing device according to claim 25, wherein the calculation unit sets, as the indicator, a level indicating an alert in each of the sections of the first area from a viewpoint of the safety.

30. The information processing device according to claim 25, wherein the acquisition unit further acquires, as the detection information, illumination information of illuminance at at least one position in each of the sections of the first area, and
the calculation unit determines the quantity of light in each of the sections on the basis of the illumination information, and updates the indicator of the section to indicate a stronger alert in a case in which the determination indicates an insufficiency in the quantity of light.

31. The information processing device according to claim 25, wherein the acquisition unit further acquires, as the detection information, the position information of the object different from the work body and the work area, in addition to the work body and the human, and
the calculation unit determines, on the basis of the position information of the object, in which section of the first area the object is located, and updates the indicator of the section to indicate a stronger alert in a case in which the determination indicates that the object is located in the section.

32. The information processing device according to claim 25, wherein the control variable is generated to cause the work body to perform at least one of setting, pausing, or slowing-down a warning mode, or delivering at least one of a sound or light from the notification unit.

33. A program for causing a computer to function as the information processing device according to any one of claims 1 to 32.
